(19) Europäisches Patentamt
European Patent Office
Office européen des brevets

(11) **EP 1 931 159 B1**

(12) **FASCICULE DE BREVET EUROPEEN**

(45) Date de publication et mention
de la délivrance du brevet:
**06.05.2009 Bulletin 2009/19**

(51) Int Cl.:
***H04W 24/00*** *(2009.01)* ***H04W 16/00*** *(2009.01)*

(21) Numéro de dépôt: **07291457.5**

(22) Date de dépôt: **05.12.2007**

(54) **Procédé et système de détermination des altérations de la qualité d'un réseau de téléphonie mobile**

Verfahren und System zur Feststellung der Veränderungen eines Mobiltelefonnetzes

Method and system for determining alterations in the quality of a mobile telephone network

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **06.12.2006 FR 0610626**

(43) Date de publication de la demande:
**11.06.2008 Bulletin 2008/24**

(73) Titulaire: **Société Française du Radiotéléphone-SFR**
**75008 Paris (FR)**

(72) Inventeurs:
• **Baillelul, Myriam**
**77111 Soignolles en Brie (FR)**
• **Vacherot-Sbaldi, Catherine**
**78370 Plaisir (FR)**

(74) Mandataire: **Debay, Yves**
**Cabinet Debay**
**126 Elysée 2**
**78170 La Celle Saint Cloud (FR)**

(56) Documents cités:
**EP-A1- 1 045 601** **WO-A-02/49382**

**Description**

La présente invention se rapporte au domaine de la détermination de la qualité d'un service de téléphonie mobile et plus particulièrement au domaine de la détermination de la qualité d'un réseau de téléphonie mobile vu par un usager.

Un réseau de téléphonie mobile permet à une station mobile (Mobile Station), habituellement un téléphone, d'évoluer dans un espace couvert et délimité par la partie radio du réseau. Cette partie radio, dite BSS (Base Station Subsystem), consiste en un maillage de stations de base, appelées BTS (Base Transceiver System) pour le GSM ou Node B pour l'UMTS, et de leurs stations de contrôle, appelées BSC (Base Station Controller) pour le GSM ou RNC pour l'UMTS. La partie routage du réseau, appelée NSS (Network Subsystem), est chargée d'acheminer la communication entre deux utilisateurs du réseau ou vers l'extérieur du réseau, comme un réseau fixe par exemple. Cette partie est composée de plusieurs MSC (Mobile Switching Center) qui effectuent le routage des communications. La liste des clients de l'opérateur du réseau est gérée à ce niveau par une base de données unique le HLR (Home Location Register). Le bon fonctionnement des différents éléments du réseau est, lui, réalisé par la partie exploitation et maintenance du réseau aussi appelée OSS (Operation Subsystem).

Malgré la maintenance réalisée par l'OSS, il arrive que des usagers présentent des problèmes de connexion au réseau à partir de leur téléphone. Ces problèmes peuvent se traduire par une difficulté de connexion, des problèmes de communication ou bien encore une communication subitement coupée. Il peut arriver que ces difficultés de connexion passent inaperçues vis-à-vis des indicateurs techniques de la qualité du réseau. En effet, les indicateurs techniques ne permettent d'apporter qu'une indication partielle de l'état du réseau car ces coupures ou altérations peuvent être dues à des problèmes techniques qui surgissent à certains points du réseau sans indicateurs techniques n'apparaissent pas pour le client grâce à une récupération du réseau. Les informations apportées par les indicateurs techniques du réseau représentent, certes, des incidents techniques sur le réseau pouvant avoir un impact au niveau du client, mais aussi des incidents n'ayant aucun impact.

Pour contrer ce problème, plusieurs solutions ont été mise en place. D'une part, des sondes, appelées « pondeuses », qui consistent en des générateurs automatiques d'appels ont été installées, et d'autre part, des testeurs sont utilisés pour parcourir le réseau et en tester la qualité. Néanmoins, ces solutions s'avèrent être très coûteuses et ne fournissent des informations qu'en des points particuliers du réseau à un instant donné et sans permettre d'obtenir une représentation global du réseau telle qu'accessible par l'usager. De plus, les analyses des coupures dites coupures « sources équipements constructeurs » ne sont pas comparables entre équipementiers et ne sont pas représentatives de toutes les coupures rencontrées par les usagers du réseau.

Le document EP1045601 propose un dispositif qui permet de réaliser des tests de connexion à partir des terminaux d'utilisateurs vers un centre de test ou depuis un centre de test vers des terminaux d'utilisateurs. Ces tests de connexion permettent de connaître divers paramètres de l'interface radio tels que les taux d'erreur, les forces des champs de chaque côté de la connexion ou les qualités de connexion en émission et en réception pour un terminal localisé à un instant défini et dans une zone définie. La réalisation de ces tests de connexion s'effectue indépendamment des habitudes d'appels des utilisateurs des terminaux mobiles utilisés. Il convient cependant de remarquer qu'un tel dispositif impose l'implantation d'une nouvelle structure au sein du réseau et l'intégration d'unité de gestion embarquée dans les terminaux pour permettre la réalisation de nouvelles connexions particulières avec des terminaux ciblés du réseau.

La présente invention a pour objectif de supprimer un ou plusieurs inconvénients de l'art antérieur et notamment de proposer une solution pour permettre, sans modification du réseau, ni addition d'un capteur ou d'un moyen

- une étape de sélection du champ « date de communication » pour extraire les MU correspondant à chaque appel du jour J, de l'heure H ou de la minute M, par comparaison de la valeur d'un champ « date de communication » propre à chaque MU avec la valeur du champ « date de communication » recherchée, les MU étant enregistrés dans un moyen de mémorisation,
- une étape de caractérisation de groupes de MU correspondant aux rappels parmi les MU des appels sélectionnés par comparaison de la valeur d'un champ « écart de durée avec la communication précédente » propre à chaque MU avec une valeur préalablement enregistrée dans un moyen de mémorisation, les MU de chaque groupe présentant des champs « client », « correspondant » et « date de communication» identiques,
- une étape de calcul d'au moins un indicateur par agrégation des MU en fonction d'un ou de plusieurs champs de données communs,
- une étape de calcul du taux de rappels pour un indicateur,
- une étape de détermination de la qualité des transmissions dans une section du réseau définie par au moins un code de champ commun à plusieurs MU,
- une étape d'intervention pour rétablir ou améliorer la qualité des communications dans la section du réseau définie par au moins un code de champ commun à plusieurs MU.

Selon une variante de l'invention, le procédé est caractérisé en ce que l'étape de détermination de la qualité des transmissions comprend une sous étape de comparaison du taux de rappels au jour J, à l'heure H ou à la minute M, dans la section du réseau définie par au moins un code de champ commun à plusieurs MU, avec l'analyse des valeurs des taux de rappels de J-1, H-1, ou M-1, et le suivi des dérives lentes basées sur une analyse temporelle dans cette même section du réseau, et enregistrée dans un moyen de mémorisation.

Selon une autre variante de l'invention, le procédé est caractérisé en ce que l'étape de détermination de la qualité des transmissions comprend une sous-étape de comparaison du taux de rappels dans la section du réseau, définie par au moins un code de champ commun à plusieurs MU, avec les taux de rappels des sections voisines du réseau.

Selon une autre variante de l'invention, le procédé est caractérisé en ce que l'étape de détermination de la qualité des transmissions comprend une sous-étape de comparaison du taux de rappels dans la section du réseau, définie par au moins un code de champ commun à plusieurs MU, avec le taux de coupure constructeur pour cette section du réseau.

Selon une autre variante de l'invention, le procédé est caractérisé en ce que l'étape de sélection comprend une sous-étape de filtrage des MU par comparaison de la valeur d'un champ « type de population » propre à chaque MU avec la valeur d'un champ enregistrée dans un moyen de mémorisation pour séparer les transmissions des différents types de clients possibles, abonnés, prépayées, roamers in (itinérance)...

Selon une autre variante de l'invention, le procédé est caractérisé en ce que le procédé comprend une étape de filtrage des MU réalisée par comparaison des valeurs des champs « types d'appel » propres à chaque MU avec les valeurs des champs correspondants enregistrées dans un moyen de mémorisation et un moyen de séparation des MU dits « entrant-sortant », des MU dits « renvois sortant » et des MU dits « renvois entrant ».

Selon une autre variante de l'invention, le procédé est caractérisé en ce que le procédé comprend une étape de détermination des champs fournissant des informations géographiques et techniques réalisée d'abord par une récupération d'au moins une liste comprenant au moins une référence pour chaque valeur du champ « code cellule » de chaque MU par une comparaison du champ « code cellule » propre à chaque MU avec les valeurs affichées par la liste chargée.

Selon une autre variante de l'invention, le procédé est caractérisé en ce que l'étape de calcul du taux de rappels met en oeuvre un algorithme réalisant l'opération suivante :

$$\text{Taux de Rappels} = \frac{\text{Nombre de Rappels}}{\left(\text{Nombre d'Appels} - \text{Nombre de Rappels}\right)}$$

Selon une autre variante de l'invention, le procédé est caractérisé en ce que l'étape de caractérisation des MU correspondant aux rappels parmi les MU des appels sélectionnés s'effectue par comparaison de la valeur d'un champ « écart de durée avec la communication précédente » propre à chaque MU avec une valeur seuil d'au moins 45 secondes.

Selon une autre variante de l'invention, le procédé est caractérisé en ce qu'il comprend :

- une étape de calcul d'au moins un type de testeurs, les testeurs étant définis au jour J-1,
- une étape d'élimination des MU effectués au jour J par les testeurs, les testeurs étant définis au jour J-1.

Selon une autre variante de l'invention, le procédé est caractérisé en ce qu'une étape de calcul des testeurs consiste à retenir les MU « entrant-sortant » correspondant à au moins cinq rappels en moins d'une minute, pour évaluer le taux de rappel.

Selon une autre variante de l'invention, le procédé est caractérisé en ce qu'une étape de calcul des testeurs défini un second type de testeurs d'une part par la mesure d'au moins sept rappels en une journée par un utilisateur et d'autre part par la mesure d'au moins cinquante pour cent des rappels effectués vers un même correspondant dit « correspondant majoritaire », parmi les MU « entrant-sortant ».

Selon une autre variante de l'invention, le procédé est caractérisé en ce que, un moyen de calcul permettant de calculer une première variable « variable 1 » et une seconde variable « variable 2 » à partir des données des MU, la première variable « variable 1 » étant définie comme la moyenne des durées des appels ajoutée à l'écart type des délais entre les appels et leurs rappels respectifs et la seconde variable « variable 2 » étant définie comme la somme de l'écart type des durées des appels avec l'écart type des délais entre les appels et leurs rappels respectifs, le second type de testeurs est défini soit par la mesure d'au moins 40 rappels effectués vers son « correspondant majoritaire », soit d'une part par la mesure d'au moins 15 rappels effectués vers son « correspondant majoritaire » et d'une première variable « variable 1 » inférieure à une valeur enregistrée dans un moyen de mémorisation, soit d'autre part par la mesure d'une première variable « variable 1 » supérieure à une valeur enregistrée dans un moyen de mémorisation et la mesure d'une seconde variable « variable 2 » inférieure ou égale à une valeur enregistrée.

Selon une autre variante de l'invention, le procédé est caractérisé en ce que les MU dits « entrant - sortant » connaissent une étape de sélection de sorte que les MU « entrant » avec un correspondant interne au réseau sont séparés des MU « sortant » avec un correspondant interne au réseau par comparaison de la valeur de leur champ « nature de correspondant » respectif avec une valeur enregistrée dans un moyen de mémoire, cette valeur enregistrée étant celle d'un correspondant interne au réseau.

Selon une autre variante de l'invention, le procédé est caractérisé en ce que les MU dits « renvois entrant » connaissent une étape de traitement des champs de sorte que les champs des MU sont modifiés afin de correspondre à des champs de MU sans renvoi depuis la seconde station mobile du réseau vers la première station mobile du réseau.

Selon une autre variante de l'invention, le procédé est caractérisé en ce que les MU dits « renvois sortant » connaissent une étape de traitement de sorte que les champs des MU sont modifiés afin de correspondre à des MU sans renvoi depuis la première station mobile du réseau vers la seconde station mobile du réseau.

Selon une autre variante de l'invention, le procédé est caractérisé en ce que le procédé comprend une étape de recherche, pour chaque MU « renvois », d'un MU « entrant/sortant » qui présente des champs « numéro de client », « numéro correspondant », « date de communication » et « heure de communication » identiques, faisant intervenir une comparaison entre les valeurs de ces champs tout en tenant compte d'une variable Δ qui permet de s'affranchir de l'écart des horloges des MSC, afin de fournir à chaque MU « renvois » les champs équipements du MU mobile-mobile correspondant.

Selon une autre variante de l'invention, le procédé est caractérisé en ce que le procédé comprend une étape de calcul d'au moins un indicateur associé à une cellule d'un MSC dit « MSC-Code cellule » obtenu par agrégation des MU ayant les champs « date de communication », « département », « région », « MSC », « LAC », « cellule », « nature de correspondant » et « type de population », identiques.

Selon une autre variante de l'invention, le procédé est caractérisé en ce que le procédé comprend une étape de calcul d'au moins un indicateur associé à un faisceau dit « MSC-Faisceau » obtenu par agrégation des MU ayant les champs « date de communication », « département », « région », « MSC », « LAC », « Faisceau», « nature de correspondant » et « type de population », identiques.

Selon une autre variante de l'invention, le procédé est caractérisé en ce que le procédé comprend une étape de calcul d'au moins un indicateur associé à des données fax dit « Fax-Data/MSC » obtenu dit par agrégation des MU ayant les champs « date de communication », « région », « MSC », « nature de correspondant » et « type de population », identiques.

Selon une autre variante de l'invention, le procédé est caractérisé en ce que le procédé comprend une étape de calcul d'au moins un indicateur associé à des numéros EZABP dit « MSC-EZABP » obtenu par agrégation des MU ayant les champs « date de communication », « département », « région », « MSC », « EZABP », « nature de correspondant » et « type de population », identiques.

Selon une variante de l'invention, le procédé est caractérisé en ce que le procédé comprend une étape de calcul d'au moins un indicateur qui peut être associé à tout autre type de données disponibles dans le MU (par exemple « APN » (Acces Point Name) pour les MU de type Data, qui peut être assimilé au « correspondant » du MU de type voix) obtenu par agrégation des MU ayant des champs « date de communication », « nature de correspondant », « noeud d'équipement réseau », et éventuellement des champs relatifs à des notions géographiques.

Une autre variante peut s'appliquer à un réseau de téléphonie fixe avec les mêmes agrégations de MU (date de communication, nature de correspondant, type de population, noeuds d'équipement réseau, notions géographiques...)

Un autre objectif de l'invention est de proposer un système permettant la mise en oeuvre de ce procédé de surveillance de la qualité d'un réseau de téléphonie mobile.

Cet objectif est atteint grâce à un système de détermination des altérations de la qualité d'un réseau de téléphonie mobile à un jour J, une heure H ou une minute M mettant en jeu un ou plusieurs équipements particuliers du réseau caractérisé en ce que le système comprend au moins :

- un dispositif d'acquisition, au niveau des Mobile-services Switching Centers (MSC, commutateurs) du réseau, ou tout autre endroit du réseau, des Messages d'Usage (MU) correspondant à chaque appel par l'enregistrement des données des MU dans un moyen de mémorisation,

- un dispositif de transmission des données des MU enregistrées depuis les MSC vers une unité centralisée,

- un dispositif de sélection de l'unité centralisée comprenant un moyen de comparaison et un moyen de mémorisation dans lequel une valeur du champ « date de communication » est enregistrée pour sélectionner les MU du jour J, de l'heure H ou de la minute M,

- dispositif de filtrage des MU comprenant un moyen de comparaison des valeurs des champs « correspondant » propres à chaque MU avec des valeurs des champs « correspondant » enregistrées dans un moyen de mémorisation et un moyen de séparation des MU dits « entrant - sortant », des MU dit « renvois entrant » des MU dits « renvois sortant » basé sur le champ « type de MU »,

- un dispositif de caractérisation des rappels pour sélectionner les MU à considérer comme rappels, parmi les MU de groupe présentant des champs « client », « correspondant » et « date de communication» identiques, le dispositif comprenant un moyen de comparaison et un moyen de mémorisation dans lequel une valeur du champ « écart de durée avec la communication précédente » est enregistrée,
- un dispositif de détermination d'au moins un type de testeurs, ce dispositif étant relié à un moyen de mémorisation qui enregistre les testeurs nouvellement reconnus, le moyen de mémorisation étant lui-même relié à un dispositif de sélection qui supprime les MU provenant de correspondants reconnus comme testeurs,
- un dispositif de détermination des champs fournissant des informations géographiques et techniques en fonction du champ « code cellule » des MU reliés à un dispositif de récupération d'au moins une liste comprenant au moins une référence pour chaque valeur du champ « code cellule », le dispositif de détermination comprenant un moyen de comparaison du champ « code cellule » propre à chaque MU avec les valeurs affichées par la liste chargée,
- un dispositif de calcul d'au moins un indicateur par agrégation des MU en fonction de plusieurs champs de données communs entre eux,
- un dispositif de transmission des indicateurs calculés à un serveur auquel ont accès des unités locales,
- un dispositif de calcul de taux de rappels mettant en oeuvre un algorithme réalisant l'opération suivante

$$\text{Taux de Rappels} = \frac{\text{Nombre de Rappels}}{(\text{Nombre d'Appels} - \text{Nombre de Rappels})}$$

- un dispositif de signalisation permettant de déclencher une intervention pour rétablir ou améliorer la qualité de la communication dans une section du réseau en lien avec le taux de rappels calculé.

Selon une variante de l'invention, le système est caractérisé en ce qu'il comprend un dispositif de détermination de la qualité des communications comprenant au moins un moyen de comparaison et un moyen de mémorisation avec au moins une valeur enregistrée correspondant à la moyenne des taux de rappels calculés au jour J-1, à l'heure H-1 ou à la minute M-1 et le suivi des dérives lentes basées sur une analyse temporelle

Selon une autre variante de l'invention, le système est caractérisé en ce qu'il comprend un dispositif de détermination de la qualité des communications comprenant au moins un moyen de comparaison et un moyen de mémorisation avec au moins une valeur enregistrée correspondant au taux de coupure constructeur.

Selon une autre variante de l'invention, le système est caractérisé en ce qu'il comprend un dispositif de filtrage des MU comprenant un moyen de comparaison de la valeur d'un champ « type de population » propre à chaque MU avec la valeur d'un champ enregistrée dans un moyen de mémorisation pour séparer les transmissions des différents types de clients possibles : abonnés, prépayés, roamers in (itinérance)...

Selon une autre variante de l'invention, le système est caractérisé en ce qu'il comprend au moins un dispositif de détermination d'au moins un type de testeurs, ce dispositif étant relié à un moyen de mémorisation qui enregistre les testeurs nouvellement reconnus, le moyen de mémorisation étant lui-même relié à un dispositif de sélection qui supprime les MU provenant de correspondants reconnus comme testeurs

Selon une autre variante de l'invention, le système est caractérisé en ce qu'il comprend au moins un dispositif de reconnaissance d'un type de testeurs, le dispositif de reconnaissance comprenant au moins un moyen d'enregistrement dans un moyen de mémorisation, des valeurs du champ « correspondant » des MU « entrant-sortant » pour lesquels d'une part les MU présentent des champs « client », « correspondant » et « date de communication» identiques, et d'autre part un moyen de mesure d'au moins cinq rappels en une minute.

Selon une autre variante de l'invention, le système est caractérisé en ce qu'il comprend au moins un dispositif de reconnaissance d'un type de testeurs, le dispositif de reconnaissance comprenant au moins un moyen d'enregistrement dans un moyen de mémorisation, des valeurs du champ « correspondant » des MU « entrant-sortant » pour lesquels d'une part les MU présentent des champs « client », « correspondant » et « date de communication» identiques, et d'autre part un moyen de mesure d'au moins sept rappels en une journée et dont au moins cinquante pour cent des rappels étaient effectués avec un même correspondant dit « correspondant majoritaire ».

Selon une autre variante de l'invention, le système est caractérisé en ce qu'il comprend un dispositif de traitement des MU dits « renvois entrant » comprenant un moyen de modification des champs des MU, afin de faire correspondre les MU dits « renvois entrant » à des MU sans renvoi depuis la seconde station mobile du réseau vers la première station mobile du réseau.

Selon une autre variante de l'invention, le système est caractérisé en ce qu'il comprend un dispositif de traitement des MU dits « renvois sortant » comprenant un moyen de modification des champs des MU, afin de faire correspondre les MU dits« renvois sortant » à des MU sans renvoi depuis la première station mobile du réseau vers la seconde station mobile du réseau.

Selon une autre variante de l'invention, le système est caractérisé en ce qu'il comprend un dispositif de recherche, pour chaque MU « renvois », d'un MU « entrant-sortant » qui présente des champs « numéro client », « numéro correspondant », « date de communication » et « heure de communication » identique, en faisant intervenir un moyen de comparaison intégrant une variable Δ qui permet de régler l'écart des horloges des MSC, cette variable étant définie et enregistrée dans un moyen de mémorisation.

Selon une autre variante de l'invention, le système est caractérisé en ce qu'il comprend un dispositif d'alarme relié à un moyen de comparaison du taux de rappels à une valeur seuil préenregistrée dans un moyen de mémorisation.

L'invention, avec ses caractéristiques et avantages, ressortira plus clairement à la lecture de la description faite en référence aux dessins annexés dans lesquels :

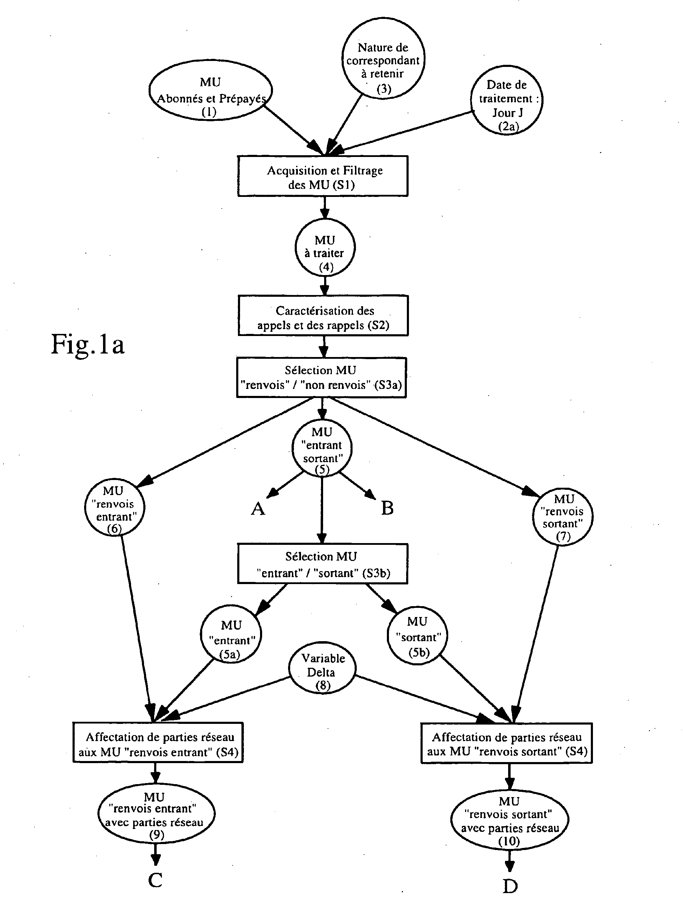

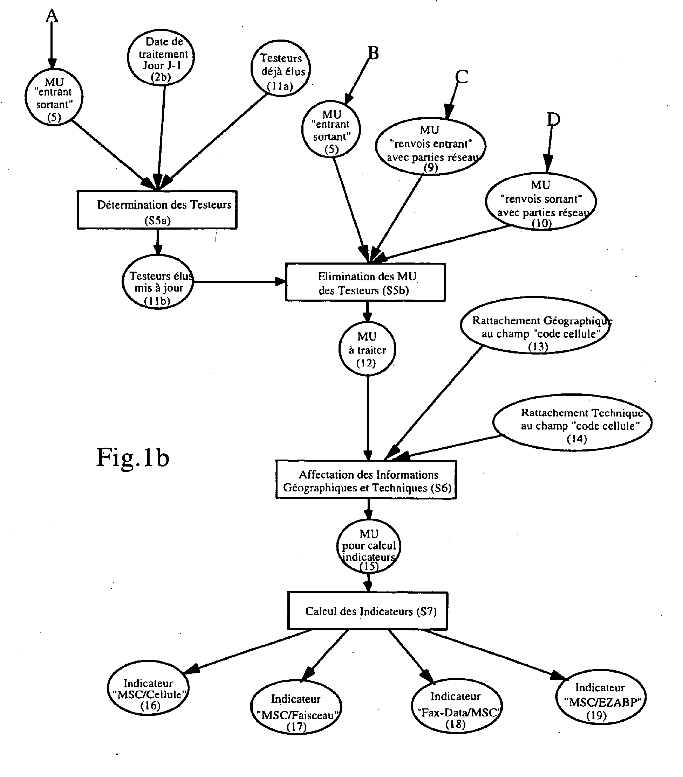

- les figures 1a et 1b représentent un schéma de l'architecture du procédé de détermination des altérations de la qualité d'un réseau de téléphonie mobile,

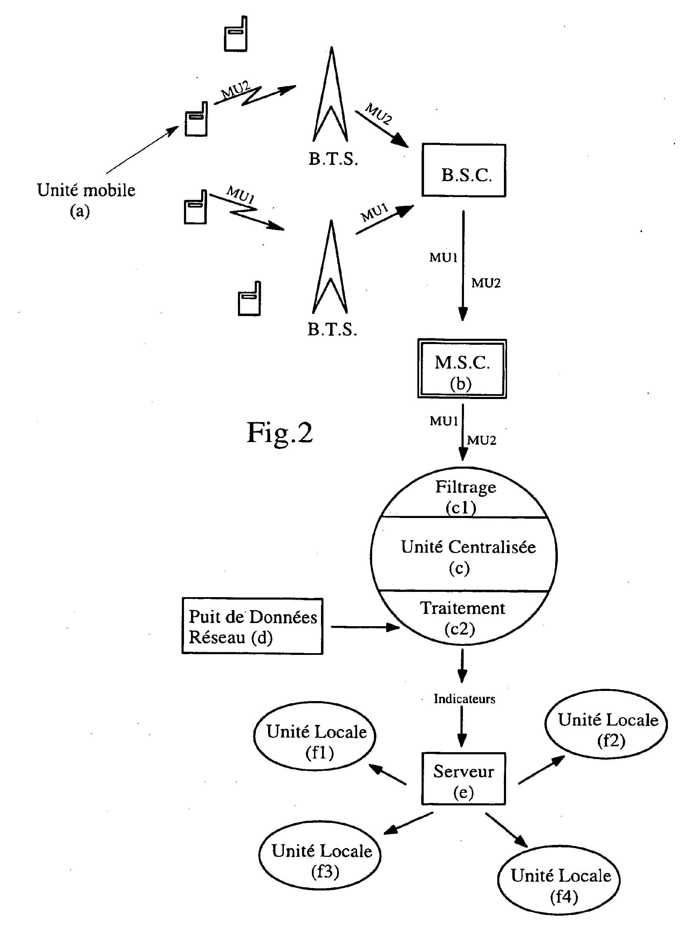

- la figure 2 représente un schéma de l'architecture du système de détermination des altérations de la qualité d'un réseau de téléphonie mobile.

La détermination de la qualité d'un réseau de téléphonie mobile telle qu'elle est vue par l'usager est difficile à réaliser techniquement notamment pour connaître la couverture d'un réseau à un instant donné. En revanche, lorsqu'un usager se trouve dans une zone dont la couverture du réseau est telle qu'elle génère une communication de mauvaise qualité ou même coupe la communication en cours, l'usager adopte un comportement caractéristique qui consiste à rappeler son interlocuteur pour terminer la conversation. En se basant sur la mesure et le calcul des rappels sur l'ensemble du territoire couvert par un réseau, il est alors aisé de reconnaître rapidement les sections du réseau qui présentent une couverture de moins bonne qualité ou une dégradation de la qualité de service (QoS). Au-delà du défaut de transmission, l'utilisation des rappels comme indice de qualité permet aussi de quantifier la dégradation, auditive ou visuelle, telle que la perçoit l'usager, chose qui était jusqu'à présent impossible à réaliser de manière systématique dans le temps et dans l'espace. De même, lors de l'usage du service « données » (Data), en cas de coupure ou dégradation de la session (lenteur), blocage ou non obtention de la donnée attendue, l'usager adopte un comportement caractéristique qui consiste à relancer une nouvelle session pour obtenir ses données.

Chaque appel réalisé et passant par une unité mobile (a) du réseau de téléphonie mobile surveillé, génère la formation d'un message d'usage transmettant un ticket qui correspond à un ensemble de champs de données. Ces données correspondent, par exemple, au numéro de client, au numéro du correspondant, à la date et l'heure de l'appel. Ces messages d'usage (MU) sont utilisés pour pouvoir tarifer chaque appel que génère un usager, abonné, prépayé, roamer in (itinérance) ou autre. La récupération des données des tickets est faite au niveau de l'interface collecte-valorisation du réseau, c'est-à-dire au niveau du MSC (Mobile-services Switching Center) (b) pour être transmises vers une unité de traitement centralisée (c). L'acquisition des données permet, à ce niveau, une récupération de l'ensemble des Messages d'Usage (MU) des clients abonnés et prépayés (1) pour un jour J ou une heure H ou encore une minute M, donné (2a). Une version ultérieure de l'application permet la récupération des données au niveau de la collecte et permet de récupérer des données supplémentaires relatives à d'autres clients (ex : roamers in (clients en itinérance), MVNO (Mobile Virtual Network Operator), ...) L'utilisation des informations à finalité financière que sont les MU, pour obtenir une mesure de la qualité des transmissions sur l'ensemble d'un réseau fait intervenir un ou plusieurs logiciels. Ces logiciels permettent de réaliser d'une part un filtrage (c1) et une sélection des MU, et d'autre part un traitement (c2) des MU sélectionnés afin d'obtenir un outil efficace pour déterminer la qualité des communications, audio, visuelles et données (data), telles qu'elles sont perçues par un usager.

Après acquisition, le flux de MU est géré par une unité de filtrage qui permet de réaliser une sélection des MU à conserver (S1). En effet, il est inutile de prendre en compte les MU différents du jour J (ou de l'heure H ou encore de la minute M donnée), les MU à caractère technique (par exemple activation d'une option d'abonnement), ni les MU dont les données du ticket sont inexploitables. Il s'agit ensuite de séparer les MU provenant des différents types de clients. Cette séparation permet d'éviter des interférences de comportement. Ces étapes de sélection des MU, en fonction de la date (2a) et de la nature du correspondant (3), font intervenir au moins un moyen de comparaison des valeurs de champs propres à chaque MU avec des valeurs champs préenregistrées dans des moyens de mémorisation. Ces valeurs correspondent au champ « date de communication » pour la sélection des MU du jour J (ou de l'heure H ou en encore de la minute M donnée) et au champ « type de population » pour la ségrégation entre les MU abonnés et prépayés.

La caractérisation des rappels (S2) est effectuée au niveau d'une unité de caractérisation, à partir du flux de MU récupérés et filtrés (4). Par l'intermédiaire d'un dispositif de traitement, les MU sont regroupés de sorte que tous les MU d'un même groupe présentent des « clients », « correspondant » et « date de communication » identiques. Grâce aux champs des MU « heure de communication », les MU de chacun des groupes sont traités par ordre chronologique. Un moyen de calcul permet de fournir pour deux MU consécutifs le délai entre la fin du $MU_n$ et le début du $MU_{n+1}$. Ce délai est affecté au champ « écart de durée avec la communication précédente » du $MU_{n+1}$. Par comparaison de la valeur de ce champ avec une valeur seuil enregistrée, le $MU_{n+1}$ est alors déterminé comme étant ou n'étant pas un rappel par rapport au MU$_n$. Dans un mode de réalisation préféré, la valeur seuil enregistrée est d'au moins 45 secondes. Ainsi, tous les MU présentant un champ « écart de durée avec la communication précédente » inférieur à cette valeur seuil sont définis comme rappels.

Le flux des MU dont les appels/rappels sont caractérisés, fait l'objet d'une division en fonction du type de communication que représente chacun des MU (S3a). En effet, une première catégorie d'appels, nommés « entrant sortant », sont internes au réseau, une seconde catégorie d'appels, nommés « renvois sortant », génèrent des renvois d'appels vers l'extérieur du réseau, enfin une troisième catégorie d'appels, nommés « renvois entrant » résultent de renvois d'appels depuis l'extérieur du réseau. Les MU récupérés sont alors traités grâce aux valeurs des champs « correspondants » propre à chaque MU par comparaison avec des valeurs enregistrées dans un moyen de mémorisation. De plus, les MU des « renvois » présentent un troisième correspondant, les champs de ces MU sont modifiés afin de faciliter le calcul des rappels sur le réseau. En effet, ces « renvois » traduisent un appel entre deux stations mobiles qui, dans les faits, n'ont pas été en communication.

Les MU du flux de MU « renvois entrant » (6) font l'objet d'un traitement particulier. Les MU « renvois entrant » (6) résultent d'un appel depuis une station extérieure au réseau X vers une première station mobile A renvoyé vers une seconde station mobile B. Ces MU sont modifiés grâce à un dispositif de traitement des champs de sorte qu'ils correspondent à des MU sans renvois depuis la seconde station mobile B vers la première station mobile A. Les champs « numéro client » et « numéro correspondant » sont inversés tandis que les champs « type de population » et « partie réseau » sont mis à blanc.

De même, les MU du flux de MU « renvois sortant » (7) font l'objet, eux aussi, d'un traitement particulier. Les MU « renvois sortant» (7) résultent d'un appel depuis une première station mobile A vers une seconde station mobile B renvoyé vers une station extérieure au réseau X. Ces MU sont modifiés grâce à un dispositif de traitement de champs de sorte qu'ils correspondent à des MU sans renvoi depuis la première station mobile A vers la seconde station mobile B. Le champ « numéro client » est affecté au champ « numéro correspondant » et le champ « numéro troisième correspondant » est transféré au champ « numéro client » tandis que les champs « type de population » et « partie réseau » sont mis à blanc et que le champ « nature de correspondant » est forcé comme étant interne au réseau. Ces modifications permettent ainsi de s'affranchir du troisième correspondant de la communication.

Les MU du flux de MU « entrant sortant » (5) font l'objet, eux aussi, d'un traitement particulier (S3b). Les MU « entrant sortant » résultent d'un appel entre deux stations mobiles sans renvoi. Ces MU sont traités par comparaison de la valeur de leur champ « nature de correspondant » respectif avec une valeur enregistrée dans un moyen de mémorisation, cette valeur enregistrée étant celle d'un correspondant interne au réseau. Une sélection est ainsi opérée de sorte que les MU « entrant » (5a) avec un correspondant interne au réseau sont séparés des MU « sortant » (5b) avec un correspondant interne au réseau.

Dans chacun des flux de MU « renvois » respectivement « entrant » (6) et « sortant » (7) est opéré un traitement afin d'affecter au MU « renvois » une partie du réseau (S4). Pour cela, les MU « entrant » (5a) des MU « entrant-sortant » (5) rejoignent alors le flux des MU « renvois entrant » (6) et respectivement, les MU « sortant » (5b) des MU « entrant-sortant » (5) rejoignent alors le flux des MU « renvois sortant » (7). Grâce à un dispositif de comparaison intégrant une variable $\Delta$ (8) qui permet de régler l'écart des horloges des MSC, pour chaque MU « renvois » (6 ou 7) est recherché un MU « entrant/sortant » (5a ou 5b) qui présente des champs « numéro client », « numéro correspondant », « date de communication » et « heure de communication », identiques. Chaque MU « renvois » (6 ou 7) associé à un MU « entrant/sortant » (5a ou 5b) en récupère les champs d'une part de la partie réseau (MSC, Cellule, LAC, faisceau entrant/faisceau sortant) et d'autre part du type de population (abonné/prépayé). Cet appariement permet de fournir à chaque MU « renvois » (6 ou 7), les champs équipements du MU mobile-mobile correspondant. Les MU « renvois » (6 ou 7) qui ne peuvent pas être associé à un MU « entrant/sortant » (5a ou 5b) sont éliminés.

Une unité de traitement des testeurs permet la détermination des testeurs (S5a) afin d'éliminer les MU provenant de sondes programmées pour réaliser des appels répétés et dont les rappels interfèrent sur les résultats du taux de rappels. Les testeurs qui sont pris en compte pour le traitement, sont définis au jour J-1, à l'heure H-1 ou à la minute M-1 (2b). Les données permettant de reconnaître ces testeurs, sont enregistrées dans un moyen de mémorisation afin de permettre leur utilisation dans des traitements ultérieurs. Le fichier des testeurs déjà déterminés ou élus (11 a) est mis à jour régulièrement de sorte que les testeurs qui ne présentent plus un comportement de testeur depuis un nombre de jours défini, voient leurs données retirées. Selon un mode de réalisation préféré, ce nombre de jour est de 16. Les testeurs peuvent être abonnés ou prépayés, en revanche ils ne réalisent pas de « renvois » ; cette étape ne concerne donc que les MU « entrant-sortant » (5). Le dispositif de reconnaissance des testeurs comprend alors au moins un moyen d'enregistrement dans un moyen de mémorisation des valeurs du champ « correspondant » des MU pour lesquels les MU présentent un même champ « client », un même champ « correspondant » et un même champ « date de communication». On définit deux types de testeurs. Un testeur de première série réalise au moins cinq rappels en moins d'une minute, et un testeur de seconde série réalise au moins sept rappels dans une journée et au moins 50% de ces rappels sont effectués vers le même correspondant qualifié de « majoritaire ».

Dans le cas des testeurs de seconde série, deux variables sont calculées pour chaque testeur potentiel. La première variable dite « variable 1 » est définie comme la moyenne des durées des appels ajoutée à l'écart type des délais entre les appels et leurs rappels respectifs. La seconde variable dite « variable 2 » est définie comme la somme de l'écart type des durées des appels avec l'écart type des délais entre les appels et leurs rappels respectifs.

L'usager est considéré comme testeur de seconde série, soit s'il réalise au moins 40 rappels avec son « correspondant majoritaire », soit s'il réalise au moins 15 rappels avec son « correspondant majoritaire » et avec une « variable 1 » inférieure à une valeur enregistrée dans un moyen de mémorisation, soit encore s'il réalise au moins 15 rappels avec son « correspondant majoritaire », avec une « variable 1 » supérieure à une valeur enregistrée dans un moyen de mémorisation et avec une « variable 2 » inférieure ou égal à une valeur enregistrée dans un moyen de mémorisation. Selon un mode de sélection préféré, la valeur enregistrée dans le moyen de mémorisation et à laquelle son comparée les « variables 1 et 2 », est de 7.

Une fois que les testeurs sont déterminés, le fichier des testeurs élus (11 b) est mis à jour et les MU provenant de ces testeurs sont retirés (S5b) des flux respectifs de MU « entrant-sortant » (5), « renvois entrant » (9) et « renvois sortant » (10) caractérisés et affectés d'une partie du réseau.

Une fois les testeurs éliminés, le flux de MU (12) est récupéré par une unité d'affectation de région géographique et technique qui traite les MU de façon à ce que les champs des MU qui fournissent des informations géographiques et techniques, soient affectés des données respectives qui correspondent au champ « code cellule » (S6). Cette opération est réalisée par un dispositif de traitement relié à un dispositif de récupération de bases de données de correspondance d'une part entre les champs « code cellule » et « département » et d'autre part entre les champs « code cellule » et « région technique », ces bases de données (13 et 14), fournies par le PDR (Puits de Données Réseau) (d) étant mises à jour et renouvelées régulièrement. Le PDR (d) est un dispositif d'information qui centralise des informations relatives aux différents équipements réseau. Le dispositif de traitement comprend, lui, un moyen de comparaison avec des bases de données enregistrées dans un moyen de mémorisation. Ces bases de données (13 et 14) correspondent à des fichiers quotidiens et permettent d'associer aux données réseau issues des MU telles que les champs « Cellule », « MSC », « Faisceau » ou « LAC », des informations beaucoup plus fines qui correspondent aux champs « Région », « Routeur », etc... qui référencent, géographiquement (13) et techniquement (14), chaque cellule. Ainsi, à partir du champ « code cellule », les champs relatifs au « département » et aux dispositifs techniques sont récupérés.

Le flux des MU traités (15) abouti à une unité de traitement où des indicateurs sont calculés (S7). Ces indicateurs font intervenir un dispositif de calcul comprenant au moins un moyen de sélection qui regroupe les différents MU en quatre types d'indicateurs suivant certains des champs des MU.

Un premier type d'indicateur dit « MSC/Code cellule » (16), est obtenu par agrégation des MU ayant au moins les champs « date de communication », « département », « région », « MSC », « LAC », « cellule », « nature de correspondant » et « type de population », identiques.

Un second type d'indicateur dit « MSC/Faisceau » (17), est obtenu par agrégation des MU ayant au moins les champs « date de communication », « département », « région », « MSC », « LAC », « Faisceau», « nature de correspondant » et « type de population », identiques.

Un troisième type d'indicateur dit « Fax/Data » (18), est obtenu par agrégation des MU ayant au moins les champs « date de communication », « région », « MSC », « nature de correspondant » et « type de population », identiques.

Un quatrième type d'indicateur associé aux numéros EZABP dit « MSC/EZABP » (19), est obtenu par agrégation des MU ayant au moins les champs « date de communication », « département », « région », « MSC », « EZABP », « nature de correspondant » et « type de population », identiques.

Selon une autre variante de l'invention, le procédé est remarquable en ce qu'il comprend une étape de calcul d'un indicateur qui peut être associé à tout autre type de données disponible dans le MU (par exemple, APN (Acces point Name) pour les MU de type Data,...) obtenues par agrégation des MU ayant des champs « date de communication », « nature de correspondant », « noeud équipement réseau », et éventuellement des champs relatifs à des notions géographiques.

Une autre variante peut s'appliquer à un réseau de téléphonie fixe avec les mêmes agrégations de MU (date de communication, nature de correspondant, type de population, noeuds d'équipement réseau, notions géographiques...)

Les différents agrégats de MU obtenus sont alors livrés sur un serveur (e) afin de pouvoir être exploités par des unités locales (f1, f2, f3, f4), par exemple des antennes régionales de surveillance du réseau.

Pour chacun des agrégats réalisés, le taux de rappels est calculé selon la formule :

$$\text{Taux de Rappels} = \frac{\text{Nombre de Rappels}}{(\text{Nombre d' Appels} - \text{Nombre de Rappels})}$$

Ainsi, pour chaque type d'indicateur, il est possible d'avoir, selon les champs communs au MU de chaque agrégat, les taux de rappels pour les appels/rappels « entrant-sortant », pour les appels/rappels « renvois », pour les appels/rappels « sortant data », etc....

La détermination de la qualité de la transmission à partir d'un indicateur est réalisée par comparaison du taux de rappels dans la section du réseau définie par l'indicateur, avec l'analyse des valeurs des taux de rappels de J-1 (H-1 ou M-1) et le suivi des dérives lentes basées sur une analyse temporelle dans cette même section du réseau, et enregistrée dans un moyen de mémorisation. De même, la qualité de la transmission peut être déterminée par comparaison du taux de rappels dans la section du réseau, définie par l'indicateur, avec le taux de coupure constructeur dans cette même section du réseau enregistré dans un moyen de mémorisation. La qualité de la transmission pour une section du réseau qui fait intervenir des équipements particuliers peut aussi être déterminée par comparaison du taux de rappels avec les sections voisines du réseau qui font intervenir ces mêmes équipements particuliers. Si ces comparaisons font apparaître soit une augmentation importante du taux de rappels, soit une différence importante avec le taux de coupure constructeur ou les taux de rappels des sections voisines, une étape d'intervention dans la zone définie par l'indicateur est nécessaire pour rétablir ou améliorer la qualité des communications.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes ;

## Revendications

1. Procédé de détermination des altérations de la qualité d'un réseau de téléphonie mobile à un jour J, une heure H ou une minute M, mettant en jeu un ou plusieurs équipements particuliers du réseau, le procédé faisant intervenir au moins un moyen de mesure et au moins un moyen de calcul, le procédé comprenant :

   - une étape d'acquisition, au niveau des Mobile-services Switching Centers, appelés MSC ou commutateurs, (b) du réseau ou à tout autre endroit du réseau, des Messages d'usage, appelé MU, (1) correspondant à chaque appel par l'enregistrement des données des MU dans un moyen de mémorisation,

   **caractérisé en ce que** le procédé comprend au moins:

   - une étape de sélection (S1) du champ « date de communication » pour extraire les MU (1) correspondant à chaque appel du jour J, de l'heure H ou de la minute M, (2a) par comparaison de la valeur d'un champ « date de communication » propre à chaque MU (1) avec la valeur du champ « date de communication » recherchée, les MU (1) étant enregistrés dans un moyen de mémorisation,
   - une étape de caractérisation (S2) de groupes de MU correspondant aux rappels parmi les MU des appels sélectionnés (4) par comparaison de la valeur d'un champ « écart de durée avec la communication précédente » propre à chaque MU avec une valeur préalablement enregistrée dans un moyen de mémorisation, les MU de chaque groupe présentant des champs « client », « correspondant » et « date de communication» identiques,
   - une étape de calcul d'au moins un indicateur (S7) par agrégation des MU (15) en fonction d'un ou de plusieurs champs de données communs,
   - une étape de calcul du taux de rappels pour un indicateur,
   - une étape de détermination de la qualité des transmissions dans une section du réseau définie par au moins un code de champ commun à plusieurs MU,
   - une étape d'intervention pour rétablir ou améliorer la qualité des communications dans la section du réseau définie par au moins un code de champ commun à plusieurs MU.

2. Procédé de détermination des altérations de la qualité d'un réseau de téléphonie mobile selon la revendication 1, **caractérisé en ce que** l'étape de détermination de la qualité des transmissions comprend une sous étape de comparaison du taux de rappels au jour J, à l'heure H ou à la minute M, dans la section du réseau définie par au moins un code de champ commun à plusieurs MU (15), avec l'analyse des taux de rappels de J-1, H-1 ou M-1 (2b) et le suivi des dérives lentes basées sur une analyse temporelle dans cette même section du réseau, et enregistrée dans un moyen de mémorisation.

3. Procédé de détermination des altérations de la qualité d'un réseau de téléphonie mobile selon la revendication 1 ou 2, **caractérisé en ce que** l'étape de détermination de la qualité des transmissions comprend une sous-étape de comparaison du taux de rappels dans la section du réseau, définie par au moins un code de champ commun à plusieurs MU (15), avec les taux de rappels des sections voisines du réseau.

**4.** Procédé de détermination des altérations de la qualité d'un réseau de téléphonie mobile selon une des revendications précédentes, **caractérisé en ce que** l'étape de détermination de la qualité des transmissions comprend une sous-étape de comparaison du taux de rappels dans la section du réseau, définie par au moins un code de champ commun à plusieurs MU (15), avec le taux de coupure constructeur pour cette section du réseau.

**5.** Procédé de détermination des altérations de la qualité d'un réseau de téléphonie mobile selon une des revendications précédentes, **caractérisé en ce que** l'étape de sélection (S1) comprend une sous-étape de filtrage des MU (1) par comparaison de la valeur d'un champ « type de population » propre à chaque MU (1) avec la valeur d'un champ enregistrée dans un moyen de mémorisation pour séparer les transmissions d'abonnés des transmissions prépayées.

**6.** Procédé de détermination des altérations de la qualité d'un réseau de téléphonie mobile selon une des revendications précédentes, **caractérisé en ce que** le procédé comprend une étape de filtrage (S3a) des MU (4) réalisée par comparaison des valeurs des champs « type d'appel » propres à chaque MU avec les valeurs des champs correspondants enregistrées dans un moyen de mémorisation et un moyen de séparation des MU dits « entrant-sortant » (5), des MU dits « renvois sortant » (7) et des MU dits « renvois entrant » (6) basé sur le champs « type de MU ».

**7.** Procédé de détermination des altérations de la qualité d'un réseau de téléphonie mobile selon une des revendications précédentes, **caractérisé en ce que** le procédé comprend une étape de détermination (S6) des champs fournissant des informations géographiques et techniques réalisée d'abord par une récupération d'au moins une liste (13 et/ou 14) comprenant au moins une référence pour chaque valeur du champ «code cellule » de chaque MU (1) par une comparaison du champ « code cellule » propre à chaque MU (12) avec les valeurs affichées par la liste chargée.

**8.** Procédé de détermination des altérations de la qualité d'un réseau de téléphonie mobile selon une des revendications précédentes, **caractérisé en ce que** l'étape de calcul du taux de rappels met en oeuvre un algorithme réalisant l'opération suivante :

$$\text{Taux de Rappels} = \frac{\text{Nombre de Rappels}}{(\text{Nombre d'Appels} - \text{Nombre de Rappels})}$$

**9.** Procédé de détermination des altérations de la qualité d'un réseau de téléphonie mobile selon une des revendications précédentes, **caractérisé en ce que** l'étape de caractérisation (S2) des MU correspondant aux rappels parmi les MU (4) des appels sélectionnés s'effectue par comparaison de la valeur d'un champ « écart de durée avec la communication précédente » propre à chaque MU (4) avec une valeur seuil d'au moins 45 secondes.

**10.** Procédé de détermination des altérations de la qualité d'un réseau de téléphonie mobile selon une des revendications précédentes, **caractérisé en ce que** le procédé comprend :

- une étape de calcul (S5a) d'au moins un type de testeurs, les testeurs étant définis au jour J-1,
- une étape d'élimination (S5b) des MU effectués au jour J par les testeurs, les testeurs étant définis au jour J-1.

**11.** Procédé de détermination des altérations de la qualité d'un réseau de téléphonie mobile selon la revendication 10, **caractérisé en ce qu'**une étape de calcul des testeurs (S5a) consiste à retenir les MU « entrant-sortant » (5) correspondant à au moins cinq rappels en moins d'une minute, pour évaluer le taux de rappel,

**12.** Procédé de détermination des altérations de la qualité d'un réseau de téléphonie mobile selon la revendication 10 ou 11, **caractérisé en ce qu'**une étape de calcul des testeurs (S5a) définit un second type de testeurs d'une part par la mesure d'au moins sept rappels en une journée par un utilisateur et d'autre part par la mesure d'au moins cinquante pour cent des rappels effectués vers un même correspondant dit « correspondant majoritaire », parmi les MU « entrant-sortant » (5).

**13.** Procédé de détermination des altérations de la qualité d'un réseau de téléphonie mobile selon la revendication 12, **caractérisé en ce que**, un moyen de calcul permettant de calculer une première variable « variable 1 » et une seconde variable « variable 2 » à partir des données des MU (5), la première variable « variable 1 » étant définie comme la moyenne des durées des appels ajoutée à l'écart type des délais entre les appels et leurs rappels respectifs et la seconde variable « variable 2 » étant définie comme la somme de l'écart type des durées des appels avec l'écart type des délais entre les appels et leurs rappels respectifs, le second type de testeurs est défini soit par la mesure d'au moins 40 rappels effectués vers son « correspondant majoritaire », soit d'une part par la mesure d'au moins 15 rappels effectués vers son « correspondant majoritaire » et d'une première variable « variable 1 » inférieure à une valeur enregistrée dans un moyen de mémorisation, soit d'autre part par la mesure d'une première variable « variable 1 » supérieure à une valeur enregistrée dans un moyen de mémorisation et la mesure d'une seconde variable « variable 2 » inférieure ou égale à une valeur enregistrée.

14. Procédé de détermination des altérations de la qualité d'un réseau de téléphonie mobile selon une des revendications précédentes, **caractérisé en ce que** les MU dits « entrant - sortant » (5) connaissent une étape de sélection (S3b) de sorte que les MU « entrant » (5a) avec un correspondant interne au réseau sont séparés des MU « sortant » (5b) avec un correspondant interne au réseau par comparaison de la valeur de leur champ « nature de correspondant » respectif avec une valeur enregistrée dans un moyen de mémoire, cette valeur enregistrée étant celle d'un correspondant interne au réseau.

15. Procédé de détermination des altérations de la qualité d'un réseau de téléphonie mobile selon une des revendications précédentes, **caractérisé en ce que** les MU dits « renvois entrant » (6) connaissent une étape de traitement des champs de sorte que les champs des MU sont modifiés afin de correspondre à des champs de MU sans renvoi depuis la seconde station mobile du réseau vers la première station mobile du réseau.

16. Procédé de détermination des altérations de la qualité d'un réseau de téléphonie mobile selon une des revendications précédentes, **caractérisé en ce que** les MU dits « renvois sortant » (7) connaissent une étape de traitement de sorte que les champs des MU sont modifiés afin de correspondre à des MU sans renvoi depuis la première station mobile du réseau vers la seconde station mobile du réseau.

17. Procédé de détermination des altérations de la qualité d'un réseau de téléphonie mobile selon une des revendications précédentes, **caractérisé en ce que** le procédé comprend une étape (S4) de recherche, pour chaque MU « renvois » (6 ou 7), d'un MU « entrant/sortant » (5a ou 5b) qui présente des champs « numéro client », « numéro correspondant », « date de communication » et « heure de communication » identiques, faisant intervenir une comparaison entre les valeurs de ces champs tout en tenant compte d'une variable Δ (8) qui permet de s'affranchir de l'écart des horloges des MSC, afin de fournir à chaque MU « renvois » les champs équipements du MU mobile-mobile correspondant.

18. Procédé de détermination des altérations de la qualité d'un réseau de téléphonie mobile selon une des revendications précédentes, **caractérisé en ce que** le procédé comprend une étape de calcul d'au moins un indicateur (S7) associé à une cellule d'un MSC dit « MSC-Code cellule » (16) obtenu par agrégation des MU (15) ayant au moins les champs « date de communication », « département », « région », « MSC », « LAC », « cellule », « nature de correspondant » et « type de population », identiques.

19. Procédé de détermination des altérations de la qualité d'un réseau de téléphonie mobile selon une des revendications précédentes, **caractérisé en ce que** le procédé comprend une étape de calcul d'au moins un indicateur (S7) associé à un faisceau dit « MSC-Faisceau » (17) obtenu par agrégation des MU (15) ayant au moins les champs « date de communication », « département », « région », « MSC », « LAC », « Faisceau», « nature de correspondant » et «type de population », identiques.

20. Procédé de détermination des altérations de la qualité d'un réseau de téléphonie mobile selon une des revendications précédentes, **caractérisé en ce que** le procédé comprend une étape de calcul d'au moins un indicateur (S7) associé à des données fax dit « Fax-Data/MSC» (18) obtenu dit par agrégation des MU (15) ayant au moins les champs « date de communication », « région », « MSC », « nature de correspondant » et « type de population », identiques.

21. Procédé de détermination des altérations de la qualité d'un réseau de téléphonie mobile selon une des revendications précédentes, **caractérisé en ce que** le procédé comprend une étape de calcul d'au moins un indicateur (S7) associé à des numéros EZABP dit « MSC-EZABP » (19) obtenu par agrégation des MU (15) ayant au moins les champs « date de communication », « département », « région », « MSC », « EZABP », « nature de correspondant » et « type de population », identiques.

22. Procédé de détermination des altérations de la qualité d'un réseau de téléphonie mobile selon une des revendications précédentes, **caractérisé en ce que** le procédé comprend une étape de calcul d'au moins un indicateur qui peut être associé à tout autre type de données disponible dans le MU, obtenu par agrégation des MU (15) ayant des champs « date de communication », « nature des correspondant », « noeud d'équipement réseau » et des champs relatifs à des notions géographiques.

**23.** Procédé de détermination des altérations de la qualité d'un réseau fixe selon une des revendications précédentes, **caractérisé en ce que** le procédé comprend une étape de calcul d'au moins un indicateur qui peut être associé à toutes autres données disponibles dans le MU (15) du réseau fixe, date de communication, nature de correspondant, type de population, noeuds d'équipement réseau, notions géographiques.

**24.** Système de détermination des altérations de la qualité d'un réseau de téléphonie mobile à un jour J, une heure H ou une minute M, mettant en jeu un ou plusieurs équipements particuliers du réseau et une unité centralisée (c) **caractérisé en ce que** le système comprend au moins :

- un dispositif d'acquisition, au niveau des Mobile-services Switching Centers, appelés MSC ou commutateurs, (b) du réseau ou tout autre endroit d'un réseau (fixe ou mobile), des Messages d'Usage (MU) (1) correspondant à chaque appel par l'enregistrement des données des MU dans un moyen de mémorisation,
- un dispositif de transmission des données des MU (1) enregistrées depuis les MSC vers une unité centralisée (c), un dispositif de sélection (c1) de l'unité centralisée (c) comprenant un moyen de comparaison et un moyen de mémorisation dans lequel une valeur du champ « date de communication » est enregistrée pour sélectionner les MU (1) du jour J, de l'heure H ou de la minute M (2a),
- un dispositif de filtrage des MU (4) comprenant un moyen de comparaison des valeurs des champs « correspondant » propres à chaque MU avec des valeurs des champs « correspondant » enregistrées dans un moyen de mémorisation, et un moyen de séparation des MU dits « entrant - sortant » (5), des MU dit « renvois entrant » (6), et des MU dits « renvois sortant » (7) basé sur le champs « type de MU »,
- un dispositif de caractérisation des rappels pour sélectionner les MU à considérer comme rappels, parmi les MU (4) de groupe présentant des champs « client », « correspondant » ou APN pour les MU de type DATA et « date de communication» identiques, le dispositif comprenant un moyen de comparaison et un moyen de mémorisation dans lequel une valeur du champ « écart de durée avec la communication précédente » est enregistrée,
- un dispositif de détermination d'au moins un type de testeurs, ce dispositif étant relié à un moyen de mémorisation qui enregistre les testeurs nouvellement reconnus (11), le moyen de mémorisation étant lui-même relié à un dispositif de sélection qui supprime les MU provenant de correspondants reconnus comme testeurs,
- un dispositif de détermination des champs fournissant des informations géographiques et techniques en fonction du champ « code cellule » des MU (12) reliés à un dispositif de récupération (d) d'au moins une liste comprenant au moins une référence pour chaque valeur du champ « code cellule », le dispositif de détermination comprenant un moyen de comparaison du champ « code cellule » propre à chaque MU (12) avec les valeurs affichées par la liste chargée,
- un dispositif de calcul d'au moins un indicateur par agrégation des MU (15) en fonction de plusieurs champs de données communs entre eux,
- un dispositif de transmission des indicateurs calculés à un serveur (e) auquel ont accès des unités locales (f1, f2, f3, f4),
- un dispositif de calcul de taux de rappels mettant en oeuvre un algorithme réalisant l'opération suivante

$$\text{Taux de Rappels} = \frac{\text{Nombre de Rappels}}{(\text{Nombre d'Appels} - \text{Nombre de Rappels})}$$

- un dispositif de signalisation permettant de déclencher une intervention pour rétablir ou améliorer la qualité de la communication dans une section du réseau en lien avec le taux de rappel calculé.

**25.** Système de détermination des altérations de la qualité d'un réseau de téléphonie mobile selon la revendication 24, **caractérisé en ce que** le système comprend un dispositif de détermination de la qualité des communications comprenant au moins un moyen de comparaison et un moyen de mémorisation avec au moins une valeur enregistrée correspondant à la moyenne des taux de rappels calculés au jour J-1, à l'heure H-1 ou à la minute M-1 (2b) et le suivi des dérives lentes basée sur une analyse temporelle.

**26.** Système de détermination des altérations de la qualité d'un réseau de téléphonie mobile selon la revendication 24 ou 25, **caractérisé en ce que** le système comprend un dispositif de détermination de la qualité des communications comprenant au moins un moyen de comparaison et un moyen de mémorisation avec au moins une valeur enregistrée correspondant au taux de coupure constructeur.

27. système de détermination des altérations de la qualité d'un réseau de téléphonie mobile selon une des revendications précédentes, **caractérisé en ce que** le système comprend un dispositif de filtrage des MU (1) comprenant un moyen de comparaison de la valeur d'un champ « type de population » propre à chaque MU (1) avec la valeur d'un champ enregistrée dans un moyen de mémorisation pour séparer les transmissions des différents types de clients, abonnés, prépayées, roamers in, itinérance...

28. Système de détermination des altérations de la qualité d'un réseau de téléphonie mobile selon une des revendications précédentes, **caractérisé en ce que** le système comprend au moins un dispositif de détermination d'au moins un type de testeurs, ce dispositif étant relié à un moyen de mémorisation qui enregistre les testeurs nouvellement reconnus (11), le moyen de mémorisation étant lui-même relié à un dispositif de sélection qui supprime les MU provenant de correspondants reconnus comme testeurs

29. Système de détermination des altérations de la qualité d'un réseau de téléphonie mobile selon la revendication 28, **caractérisé en ce que** le système comprend au moins un dispositif de reconnaissance d'un type de testeurs, le dispositif de reconnaissance comprenant au moins un moyen d'enregistrement dans un moyen de mémorisation, des valeurs du champ « correspondants » des MU « entrant-sortant » (5) pour lesquels d'une part les MU (5) présentent des champs « client », « correspondant » et « date de communication » identiques, et d'autre part un moyen de mesure a déterminé au moins cinq rappels en une minute.

30. Système de détermination des altérations de la qualité d'un réseau de téléphonie mobile selon une des revendications 28 ou 29, **caractérisé en ce que** le système comprend au moins un dispositif de reconnaissance d'un type de testeurs, le dispositif de reconnaissance comprenant au moins un moyen d'enregistrement dans un moyen de mémorisation, des valeurs du champ « correspondant » des MU « entrant-sortant » (5) pour lesquels d'une part les MU présentant des champs « client », « correspondant » et « date de communication» identiques, et d'autre part un moyen de mesure d'au moins sept rappels en une jouée et dont au moins cinquante pour cent des rappels étaient effectués avec un même correspondant dit «correspondant majoritaire ».

31. Système de détermination des altérations de la qualité d'un réseau de téléphonie mobile selon une des revendications précédentes, **caractérisé en ce que** le système comprend un dispositif de traitement des MU dits « renvois entrant» (6) comprenant un moyen de modification des champs des MU, afin de faire correspondre les MU dits « renvois entrant » (6) à des MU sans renvoi depuis la seconde station mobile du réseau vers la première station mobile du réseau.

32. Système de détermination des altérations de la qualité d'un réseau de téléphonie mobile selon une des revendications précédentes, **caractérisé en ce que** le système comprend un dispositif de traitement des MU dits « renvois sortant » (7) comprenant un moyen de modification des champs des MU, afin de faire correspondre les MU dits« renvois sortant » (7) à des MU sans renvoi depuis la première station mobile du réseau vers la seconde station mobile du réseau.

33. Système de détermination des altérations de la qualité d'un réseau de téléphone mobile selon une des revendications précédentes, **caractérisé en ce que** le système comprend un dispositif de recherche, pour chaque MU « renvois » (6 ou 7), d'un MU « entrant/sortant » (5) qui présente des champs «numéro client », « numéro correspondant », « date de communication » et « heure de communication » identique, en faisant intervenir un moyen de comparaison intégrant une variable $\Delta$ (8) qui permet de régler l'écart des horloges des MSC, cette variable (8) étant définie et enregistrée dans un moyen de mémorisation.

34. Système de détermination des altérations de la qualité d'un réseau de téléphonie mobile selon une des revendications précédentes, **caractérisé en ce que** le système comprend un dispositif d'alarme relié à un moyen de comparaison du taux de rappels à un valeur seuil préenregistrée dans un moyen de mémorisation.

**Claims**

1. Method of determination of alterations in the quality of a mobile telephone network on a day D, at an hour H or at a minute M, making use of one or several particular units of the network, wherein the method implements at least one measurement means and at least one calculation means, the method comprising:

- a step of acquisition, at the Mobile Services Switching Centres, referred to as MSCs or switches, (b) of the network or at any other point in the network, of Usage Messages, referred to as UMs, (1) corresponding to each call by the recording of the data of the UMs in a storage means,

**characterised in that** the method comprises at least:

- a step of selection (S1) of the "communication date" field for extracting the UMs (1) corresponding to each call on the day D, at the hour H or at the minute M, (2a) by comparison of the value of a "communication date" field appertaining to each UM (1) with the value of the "communication date" field sought, wherein the UMs (1) are recorded in a storage means,
- a step of characterisation (S2) of groups of UMs corresponding to the recalls from amongst the MUs of the selected calls (4) by comparison of the value of a "difference in duration from the preceding communication" field appertaining to each UM with a value previously recorded in a storage means, wherein the UMs of each group have identical "client", "caller" and "communication date" fields,
- a step of calculation of at least one indicator (S7) by grouping the UMs (15) as a function of one or several common data fields,
- a step of calculation of the callback rate for an indicator,
- a step of determination of the quality of the transmissions in a section of the network defined by at least one field code common to several UMs,
- a step of intervention to restore or improve the quality of the communications in the section of the network defined by at least one field code common to several UMs.

2. Method of determination of alterations in the quality of a mobile telephone network as claimed in Claim 1, **characterised in that** the step of determination of the quality of the transmissions comprises a sub-step of comparison of the callback rate on the day D, at the hour H or at the minute M, in the section of the network defined by at least one field code common to several UMs, with the analysis of the callback rates for D-1, H-1 or M-1 (2b) and the follow-up of the slow deviations based on a timing analysis in this same section of the network and recorded in a storage means.

3. Method of determination of alterations in the quality of a mobile telephone network as claimed in Claim 1 or Claim 2, **characterised in that** the step of determination of the quality of the transmissions comprises a sub-step of comparison of the callback rate in the section of the network defined by at least one field code common to several UMs with the callback rates of the adjacent sections of the network.

4. Method of determination of alterations in the quality of a mobile telephone network as claimed in any one of the preceding claims, **characterised in that** the step of determination of the quality of the transmissions comprises a sub-step of comparison of the callback rate in the section of the network defined by at least one field code common to several UMs (15) with the manufacturer's cutoff rate for this section of the network.

5. Method of determination of alterations in the quality of a mobile telephone network as claimed in any one of the preceding claims, **characterised in that** the selection step (S1) comprises a sub-step of filtering of the UMs (1) by comparison of the value of a "population type" field appertaining to each UM (1) with the value of a field recorded in a storage means in order to separate the subscriber transmissions from the prepaid transmissions.

6. Method of determination of alterations in the quality of a mobile telephone network as claimed in any one of the preceding claims, **characterised in that** the method comprises a step of filtration (S3a) of the UMs (4) carried out by comparison of the values of the "call type" fields appertaining to each UM with the values of the corresponding fields recorded in a storage means and a means of separation of the so-called "incoming-outgoing" UMs from the so-called "return outgoing" UMs and the so-called "return incoming" UMs based on the "UM type" field.

7. Method of determination of alterations in the quality of a mobile telephone network as claimed in any one of the preceding claims, **characterised in that** the method comprises a step of determination (S6) of the fields supplying geographical and technical information carried out first of all by recovery of at least one list (13 and/or 14) containing at least one reference for each value of the "cell code" field of each UM (1) by a comparison of the "cell code" field appertaining to each UM (12) with the values displayed by the loaded list.

8. Method of determination of alterations in the quality of a mobile telephone network as claimed in any one of the preceding claims, **characterised in that** the step of calculation of the callback rate implements an algorithm carrying out the following operation:

$$\text{Callback rate} = \frac{\text{Number of callbacks}}{(\text{Number of calls - Number of callbacks})}$$

9. Method of determination of alterations in the quality of a mobile telephone network as claimed in any one of the preceding claims, **characterised in that** the step of characterisation (S2) of the UMs corresponding to the callbacks from amongst the UMs (4) of the selected calls is carried out by comparison of the value of a "difference in duration from the preceding communication" field appertaining to each UM (4) with a threshold value of at least 45 seconds.

10. Method of determination of alterations in the quality of a mobile telephone network as claimed in any one of the preceding claims, **characterised in that** the method comprises:

   - a step of calculation (S5a) of at least one type of tester, the testers being defined on day D-1,
   - a step of elimination (S5b) of the UMs carried out on day D by the testers, the testers being defined on day D-1.

11. Method of determination of alterations in the quality of a mobile telephone network as claimed in Claim 10, **characterised in that** a step (S5a) of calculation of the testers consists of retaining the "incoming-outgoing" UMs corresponding to at least five callbacks in less than one minute in order to evaluate the callback rate.

12. Method of determination of alterations in the quality of a mobile telephone network as claimed in Claim 10, **characterised in that** a step (S5a) of calculation of the testers defines a second type of tester on the one hand by measurement of at least seven callbacks in one day by a user and on the other hand by measurement of at least fifty percent of the callbacks made to the same caller, the so-called "majority caller", from amongst the "incoming-outgoing" UMs (5).

13. Method of determination of alterations in the quality of a mobile telephone network as claimed in Claim 12, **characterised in that** a calculation means makes it possible to calculate a first variable "variable 1" and a second variable "variable 2" from the data of the UMs (5), wherein the first variable "variable 1" is defined as the mean value of the durations of the calls added to the standard deviation of the intervals between the calls and their respective callbacks and the second variable "variable 2" is defined as the sum of the standard deviation of the call durations and the standard deviation of the intervals between the calls and their respective callbacks, and wherein the second type of tester is defined either by measurement of at least 40 callbacks made to his/her "majority caller" or on the one hand by measurement of at least 15 callbacks made to his/her "majority caller" and a first variable "variable 1" lower than a value recorded in a storage means, or on the other hand by measurement of a first variable "variable 1 " higher than a value recorded in a storage means and measurement of a second variable "variable 2" lower than or equal to a recorded value.

14. Method of determination of alterations in the quality of a mobile telephone network as claimed in any one of the preceding claims, **characterised in that** the so-called "incoming-outgoing" UMs (5) have a step of selection (S3b) such that the "incoming" UMs (5a) with a caller inside the network are separated from the "outgoing" UMs (5b) with a caller inside the network by comparison of the value of their respective "nature of caller" field with a value recorded in the storage means, wherein this recorded value is that of a caller inside the network.

15. Method of determination of alterations in the quality of a mobile telephone network as claimed in any one of the preceding claims, **characterised in that** the UMs referred to as "incoming returns" (6) have a step of processing the fields in such a way that the fields of the UMs are modified in order to correspond to fields of UMs without a return from the second mobile station of the network to the first mobile station of the network.

16. Method of determination of alterations in the quality of a mobile telephone network as claimed in any one of the preceding claims, **characterised in that** the UMs referred to as " outgoing returns" (7) have a step of processing in such a way that the fields of the UMs are modified in order to correspond to UMs without a return from the first mobile station of the network to the second mobile station of the network.

17. Method of determination of alterations in the quality of a mobile telephone network as claimed in any one of the preceding claims, **characterised in that** the method comprises a step (S4) of seeking, for each "return" UM (6 or 7), an "incoming/outgoing" UM (5a or 5b) which has identical "client number", "caller number", "communication date" and "communication time" fields, by making a comparison between the values of these fields whilst taking into account a variable Δ (8) which makes it possible to eliminate the difference between the clocks of the MSCs in order to supply the equipment fields of the corresponding mobile-mobile UM to each "return" UM.

18. Method of determination of alterations in the quality of a mobile telephone network as claimed in any one of the preceding claims, **characterised in that** the method comprises a step of calculation of at least one indicator (S7) associated with one cell of an MSC referred to as an "MSC cell code" (16) obtained by grouping the UMs having at least the identical fields "communication date", "department", "region", "MSC", "LAC", "cell", "nature of caller" and "population type".

19. Method of determination of alterations in the quality of a mobile telephone network as claimed in any one of the preceding claims, **characterised in that** the method comprises a step of calculation of at least one indicator (S7) associated with a bundle referred to as an "MSC Bundle" (17) obtained by grouping the UMs (15) having at least the identical fields "communication date", "department", "region", "MSC", "LAC", "bundle", "nature of caller" and "population type".

20. Method of determination of alterations in the quality of a mobile telephone network as claimed in any one of the preceding claims, **characterised in that** the method comprises a step of calculation of at least one indicator (S7) associated with fax data referred to as "Fax Data/MSC" (18) obtained by grouping of the UMs (15) having at least the identical fields "communication date", "region", "MSC", "nature of caller" and "population type".

21. Method of determination of alterations in the quality of a mobile telephone network as claimed in any one of the preceding claims, **characterised in that** the method comprises a step of calculation of at least one indicator (S7) associated with EZABP numbers referred to as "MSC-EZABP" (19) obtained by grouping of the UMs (15) having at least the identical fields "communication date", "department", "region", "MSC", "EZABP", "nature of caller" and "population type".

22. Method of determination of alterations in the quality of a mobile telephone network as claimed in any one of the preceding claims, **characterised in that** the method comprises a step of calculation of at least one indicator which can be associated with any other type of data available in the UM, obtained by grouping of the UMs having "communication date", "nature of callers", "network equipment node" fields and fields relating to geographical concepts.

23. Method of determination of alterations in the quality of a fixed network as claimed in any one of the preceding claims, **characterised in that** the method comprises a step of calculation of at least one indicator which can be associated with any other data available in the UM (15) of the fixed network, communication date, nature of caller, population type, network equipment nodes, geographical concepts.

24. System for determination of alterations in the quality of a mobile telephone network on a day D, at an hour H or a minute M, making use of one or more particular units of the network and a centralised unit (c), **characterised in that** the system comprises at least:

- a device for acquisition, at the Mobile Services Switching Centres, referred to as MSCs or switches, (b) of the network or at any other point in the network, of Usage Messages, referred to as UMs, (1) corresponding to each call by the recording of the data of the UMs in a storage means,
- a device for transmission of the data of the recorded UMs (1) from the MSCs to a central unit (c),
- a device (c1) for selection of the centralised unit (c) comprising a comparison means and a storage means in which a value of the "communication date" field is recorded for selection of the UMs (1) on the day D, at the hour H or the minute M (2a),
- a device for filtering of the UMs (4) comprising a means for comparison of the values of the "caller" fields appertaining to each UM with values of the "caller" fields recorded in a storage means, and a means for separation of the so-called "incoming-outgoing" UMs (5) from the so-called "incoming return" UMs (6) and the so-called "outgoing return" UMs (7) based on the "type of UM" fields,
- a device for characterisation of the callbacks for selection of the UMs to be considered as callbacks from amongst the UMs (4) of the group having identical "client", "caller" (or APN for UMs of the DATA type) and "communication date" fields, wherein the device comprises a comparison means and a storage means in which a value of the " difference in duration from the preceding communication " field is recorded,

- a device for determination of at least one type of tester, wherein this device is connected to a storage means which records the newly recognised testers (11) and wherein the storage means itself is connected to a selection device which deletes the UMs originating from callers recognised as testers,

- a device for determination of the fields supplying geographical and technical information as a function of the "cell code" field of the UMs (12) connected to a device for recovery (d) of at least one list containing at least one reference for each value of the "cell code" field, wherein the determination device comprises a means for comparison of the "cell code" field appertaining to each UM (12) with the values displayed by the loaded list,

- a device for calculation of at least one indicator by grouping of the UMs (15) as a function of a plurality of common data fields,

- a device for transmission of the calculated indicators to a server (e) to which local units (f1, f2, f3, f4) have access,

- a device for calculation of the callback rate implements an algorithm carrying out the following operation:

$$\text{Callback rate} = \frac{\text{Number of callbacks}}{(\text{Number of calls} - \text{Number of callbacks})}$$

- signalling device enabling initiation of an intervention in order to restore or improve the quality of the communication in a section of the network linked to the calculated callback rate.

25. System for determination of alterations in the quality of a mobile telephone network as claimed in Claim 24, **characterised in that** the system comprises a device for determination of the quality of the communications comprising at least one comparison means and one storage means, with at least one recorded value corresponding to the mean value of the callback rates calculated on day D-1, at hour H-1 or minute M-1 (2b) and the follow-up of the slow deviations based on a timing analysis.

26. System for determination of alterations in the quality of a mobile telephone network as claimed in Claim 24 or Claim 25, **characterised in that** the system comprises a device for determination of the quality of the communications comprising at least one comparison means and one storage means with at least one recorded value corresponding to the manufacturer's cutoff rate.

27. System for determination of alterations in the quality of a mobile telephone network as claimed in any one of the preceding claims, **characterised in that** the system comprises a device for filtering the UMs (1) comprising a means for comparison of the value of a "population type" field appertaining to each UM (1) with the value of a field recorded in a storage means in order to separate the transmissions from the different types of clients, subscribers, prepaid, roamers in, roaming...

28. System for determination of alterations in the quality of a mobile telephone network as claimed in any one of the preceding claims, **characterised in that** the system comprises at least one device for determination of at least one type of tester, wherein this device is connected to a storage means which records the newly recognised testers (11) and wherein the storage means itself is connected to a selection device which deletes the UMs originating from callers recognised as testers.

29. System for determination of alterations in the quality of a mobile telephone network as claimed in Claim 28, **characterised in that** the system comprises at least one device for recognition of a type of tester, wherein the recognition device comprises at least one recording means in a storage means for recording the values of the "caller" field of the "incoming-outgoing" UMs (5) for which on the one hand the UMs (5) have identical "client", "caller" and "communication date" fields and on the other hand have a measurement means for determination of at least five callbacks in one minute.

30. System for determination of alterations in the quality of a mobile telephone network as claimed in either Claim 28 or Claim 29, **characterised in that** the system comprises at least one device for recognition of a type of tester, wherein the recognition device comprises at least one recording means in a storage means for recording the values of the "caller" field of the "incoming-outgoing" UMs (5) for which on the one hand the UMs having identical "client", "caller" and "communication date" fields, and on the other hand a means for measurement of at least seven callbacks in one day, of which at least fifty percent were made with the same caller, referred to as the "majority caller".

31. System for determination of alterations in the quality of a mobile telephone network as claimed in any one of the preceding claims, **characterised in that** the system comprises a device for processing the so-called "incoming return" UMs (6), comprising a means for modification of the fields of the UMs in order to match the so-called "incoming return" UMs (6) to UMs without return from the second mobile station of the network to the first mobile station of the network.

32. System for determination of alterations in the quality of a mobile telephone network as claimed in any one of the preceding claims, **characterised in that** the system comprises a device for processing the so-called "outgoing return" UMs (7) comprising a means for modification of the fields of the UMs in order to match the so-called "outgoing return" UMs (7) to UMs without a return from the first mobile station of the network to the second mobile station of the network.

33. System for determination of alterations in the quality of a mobile telephone network as claimed in any one of the preceding claims, **characterised in that** the system comprises a device for seeking, for each "return" UM (6 or 7), an "incoming/outgoing" UM (5) which has identical "client number", "caller number", "communication date" and "communication time" fields, by implementing a comparison means integrating a variable Δ (8) which makes it possible to control the difference between the MSC clocks, wherein this variable (8) is defined and recorded in a storage means.

34. System for determination of alterations in the quality of a mobile telephone network as claimed in any one of the preceding claims, **characterised in that** the system comprises an alarm device connected to a means for comparison of the callback rate to a threshold value pre-recorded in a storage means.

**Patentansprüche**

1. Verfahren zum Ermitteln der Veränderungen der Qualität eines Mobiltelefonie-Netzwerks an einem Tag J, in einer Stunde H oder in einer Minute M, wobei eine oder mehrere bestimmte Einrichtungen des Netzwerks eingesetzt werden, wobei das Verfahren mindestens ein Messmittel und mindestens ein Rechenmittel einsetzt, wobei das Verfahren aufweist:

- einen Schritt des Erfassens, auf der Ebene der Mobile-Services-Switching-Center [Mobil-Dienst-Vermittlungs-Zentren], die als MSC oder Kommutatoren (b) bezeichnet werden, des Netzes oder in jedem anderen Bereich des Netzwerks, der als MU bezeichneten, jedem Anruf entsprechenden Nutzungsnachrichten (1) durch Aufzeichnen der Daten der MUs in einem Speichermittel,

**dadurch gekennzeichnet, dass** das Verfahren mindestens aufweist:

- einen Schritt des Auswählens (S1) des Feldes "Kommunikationsdatum" zum Extrahieren der MUs (1), die jedem Anruf des Tages J, der Stunde H oder der Minute M (2a) entsprechen, mittels Vergleichens des Wertes eines jeder MU (1) eigenen "Kommunikationsdatum"-Feldes mit dem Wert des gesuchten "Kommunikationsdatum"-Feldes, wobei die MUs (1) in einem Speichermittel gespeichert sind,
- einen Schritt des Kennzeichnens (S2) von MU-Gruppen, die den Rückrufen aus den MUs der ausgewählten Anrufe (4) entsprechen, mittels Vergleichens des Wertes eines jeder MU eigenen Feldes "Abweichung der Dauer zu der vorhergehenden Kommunikation" mit einem zuvor in einem Speichermittel gespeicherten Wert, wobei die MUs jeder Gruppe identische "Kunde"- "Gesprächsteilnehmer"- und "Kommunikationsdatum"-Felder aufweisen,
- einen Schritt des Berechnens mindestens eines Indikators (S7) mittels Aggregation der MUs (15) in Abhängigkeit von einem oder mehreren gemeinsamen Datenfeldern,
- einen Schritt des Berechnens der Rückrufrate für einen Indikator,
- einen Schritt des Ermittelns der Qualität der Übertragungen in einem Abschnitt des Netzwerks, der durch mindestens einen für mehrere MUs gemeinsamen Feldcode definiert wird,
- einen Interventionsschritt zum Wiederherstellen oder Verbessern der Qualität der Kommunikation in dem Netzabschnitt, der durch mindestens einen Feldcode definiert ist, der mehreren MUs gemeinsam ist.

2. Verfahren zum Ermitteln der Veränderungen der Qualität eines Mobiltelefonie-Netzwerks gemäß Anspruch 1, **dadurch gekennzeichnet, dass** der Schritt des Ermittelns der Qualität der Übertragungen aufweist: einen Teilschritt zum Vergleichen der Rückrufrate am Tag J, in der Stunde H oder in der Minute M in dem Abschnitt des Netzwerks, der durch mindestens einen Feldcode definiert ist, der mehreren MUs (15) gemeinsam ist, mit der Analyse der Rückrufraten von J-1, H-1 oder M-1 (2b), und dem Nachverfolgen der langsamen Abweichungen auf der Grundlage einer Zeitanalyse in demselben Abschnitt des Netzwerks, und der in einem Speichermittel gespeichert ist.

3. Verfahren zum Ermitteln der Veränderungen der Qualität eines Mobiltelefonie-Netzwerks gemäß Anspruch 1 oder 2, **dadurch gekennzeichnet, dass** der Schritt des Ermittelns der Qualität der Übertragungen aufweist: einen Teilschritt zum Vergleichen der Rückrufrate in dem Abschnitt des Netzwerks, der durch mindestens einen Feldcode definiert ist, der mehreren MUs (15) gemeinsam ist, mit den Rückrufraten der benachbarten Abschnitte des Netzwerks.

4. Verfahren zum Ermitteln der Veränderungen der Qualität eines Mobiltelefonie-Netzwerks gemäß einem der vorhergehenden Ansprüche, **dadurch gekennzeichnet, dass** der Schritt des Ermittelns der Qualität der Übertragungen aufweist: einen Teilschritt zum Vergleichen der Rückrufrate in dem Abschnitt des Netzwerks, der durch mindestens einen Feldcode definiert ist, der mehreren MUs (15) gemeinsam ist, mit der Hersteller-Trennungsrate für diesen Abschnitt des Netzwerks.

5. Verfahren zum Ermitteln der Veränderungen der Qualität eines Mobiltelefonie-Netzwerks gemäß einem der vorhergehenden Ansprüche, **dadurch gekennzeichnet, dass** der Auswahlschritt (S1) aufweist: einen Teilschritt zum Filtern der MUs (1) durch Vergleichen des Wertes eines jeder MU (1) eigenen "Populationstyp"-Feldes mit dem Wert eines Feldes, der in einem Speichermittel gespeichert ist, zum Trennen der Übertragungen von Vertragsinhabern von den Übertragungen von Vorausbezahl-Karten-Nutzern.

6. Verfahren zum Ermitteln der Veränderungen der Qualität eines Mobiltelefonie-Netzwerks gemäß einem der vorhergehenden Ansprüche, **dadurch gekennzeichnet, dass** das Verfahren einen Schritt des Filterns (S3a) der MUs (4) aufweist, der realisiert wird durch einen Vergleich der Werte der jeder MU eigenen "Anruftyp"-Felder mit den Werten der entsprechenden Felder, die in einem Speichermittel und einem Mittel zum Trennen der als "eingehend-ausgehend" (5) bezeichneten MUs von den als "ausgehende Rücksendungen" (7) bezeichneten MUs und den als "eingehende Rücksendungen" (6) bezeichneten MUs gespeichert sind, auf der Grundlage der "MU-Typ"-Felder.

7. Verfahren zum Ermitteln der Veränderungen der Qualität eines Mobiltelefonie-Netzwerks gemäß einem der vorhergehenden Ansprüche, **dadurch gekennzeichnet, dass** das Verfahren einen Schritt zum Ermitteln (S6) der geographische und technische Informationen bereitstellenden Felder aufweist, der zunächst durch ein Wiederherstellen von mindestens einer Liste (13 und/oder 14) realisiert wird, die mindestens einen Verweis in Bezug auf jeden Wert des "Zellcode"-Feldes jeder MU (1) aufweist, durch Vergleichen des "Zellcode"-Feldes, das jeder MU (12) eigen ist, mit Werten, die von der geladenen Liste angezeigt werden.

8. Verfahren zum Ermitteln der Veränderungen der Qualität eines Mobiltelefonie-Netzwerks gemäß einem der vorhergehenden Ansprüche, **dadurch gekennzeichnet, dass** der Schritt des Berechnens der Rückrufrate einen Algorithmus anwendet, der die folgende Operation realisiert:

$$Rückrufrate = \frac{Anzahl\ der\ Rückrufe}{(Anzahl\ der Anrufe - Anzahl\ der\ Rückrufe)}$$

9. Verfahren zum Ermitteln der Veränderungen der Qualität eines Mobiltelefonie-Netzwerks gemäß einem der vorhergehenden Ansprüche, **dadurch gekennzeichnet, dass** der Schritt des Kennzeichnens (S2) der den Rückrufen aus den MUs (4) der ausgewählten Anrufe entsprechenden MUs mittels Vergleichens des Wertes eines Feldes "Abweichung der Dauer zu der vorherigen Kommunikation", das jeder MU (4) eigen ist, mit einem Schwellenwert von mindestens 45 Sekunden erfolgt.

**10.** Verfahren zum Ermitteln der Veränderungen der Qualität eines Mobiltelefonie-Netzwerks gemäß einem der vorhergehenden Ansprüche, **dadurch gekennzeichnet, dass** das Verfahren aufweist:

- einen Schritt (S5a) des Berechnens von mindestens einem Typ von Testern, wobei die Tester am Tag J-1 definiert sind,
- einen Schritt (S5b) des Unterdrückens der am Tag J von den Testern durchgeführten MUs, wobei die Tester am Tag J-1 definiert sind.

**11.** Verfahren zum Ermitteln der Veränderungen der Qualität eines Mobiltelefonie-Netzwerks gemäß Anspruch 10, **dadurch gekennzeichnet, dass** ein Schritt des Berechnens der Tester (S5a) im Zurückhalten der "eingehendausgehend"-MUs (5), die mindestens fünf Rückrufen in weniger als einer Minute entsprechen, zum Ermitteln der Rückrufrate besteht.

**12.** Verfahren zum Ermitteln der Veränderungen der Qualität eines Mobiltelefonie-Netzwerks gemäß Anspruch 10 oder 11, **dadurch gekennzeichnet, dass** ein Schritt des Berechnens der Tester (S5a) einen zweiten Typ von Testern definiert, einerseits durch das Messen von mindestens sieben Rückrufen an einem Tag durch einen Benutzer und andererseits durch das Messen von mindestens fünfzig Prozent der Rückrufe, die in Richtung zu einem selben Gesprächsteilnehmer erfolgen, der als "Mehrheitsgesprächsteilnehmer" bezeichnet wird, von den "eingehend-ausgehend"-MUs (5).

**13.** Verfahren zum Ermitteln der Veränderungen der Qualität eines Mobiltelefonie-Netzwerks gemäß Anspruch 12, **dadurch gekennzeichnet, dass**, während ein Rechenmittel das Berechnen einer ersten Variable "Variable 1" und einer zweiten Variable "Variable 2" ausgehend von den Daten der MUs (5) ermöglicht, wobei die erste Variable "Variable 1" als der Durchschnitt der Anrufdauern definiert ist, der der Standardabweichung der Verzögerungen zwischen den Anrufen und ihren jeweiligen Rückrufen hinzugefügt wird, und die zweite Variable "Variable 2" als die Summe der Standardabweichung der Anrufdauern mit der Standardabweichung der Verzögerungen zwischen den Anrufen und ihren jeweiligen Rückrufen definiert ist, der zweite Typ von Testern entweder durch das Messen von mindestens 40 Rückrufen, die in Richtung zu dem "Mehrheitsgesprächsteilnehmer" durchgeführt werden, oder einerseits durch das Messen von mindestens 15 Rückrufen, die in Richtung zu dem "Mehrheitsgesprächsteilnehmer" durchgeführt werden und einer ersten Variable "Variable 1", die kleiner als ein in einem Speichermittel gespeicherter Wert ist, oder andererseits durch das Messen einer ersten Variable "Variable 1", die größer ist als ein in einem Speichermittel gespeicherter Wert und das Messen einer zweiten Variable "Variable 2", die kleiner oder gleich einem gespeicherten Wert ist, definiert wird.

**14.** Verfahren zum Ermitteln der Veränderungen der Qualität eines Mobiltelefonie-Netzwerks gemäß einem der vorhergehenden Ansprüche, **dadurch gekennzeichnet, dass** die als "eingehend-ausgehend" (5) bezeichneten MUs einen Auswahlschritt (S3b) kennen, so dass die "eingehend"-MUs (5a) mit einem internen Gesprächsteilnehmer im Netzwerk von den "ausgehend"-MUs (5b) mit einem internen Gesprächsteilnehmer im Netzwerk getrennt werden, durch Vergleichen des Wertes ihres jeweiligen Feldes "Art des Gesprächsteilnehmers" mit einem Wert, der in einem Speichermittel gespeichert ist, wobei der gespeicherte Wert der eines internen Gesprächsteilnehmers des Netzwerks ist.

**15.** Verfahren zum Ermitteln der Veränderungen der Qualität eines Mobiltelefonie-Netzwerks gemäß einem der vorhergehenden Ansprüche, **dadurch gekennzeichnet, dass** die als "eingehende Rücksendungen" (6) bezeichneten MUs einen Schritt des Verarbeitens der Felder kennen, so dass die Felder der MUs modifiziert werden, damit sie MU-Feldern ohne Rücksendung von der zweiten Mobilstation des Netzwerks in Richtung zu der ersten Mobilstation des Netzwerks entsprechen.

**16.** Verfahren zum Ermitteln der Veränderungen der Qualität eines Mobiltelefonie-Netzwerks gemäß einem der vorhergehenden Ansprüche, **dadurch gekennzeichnet, dass** die als "ausgehende Rücksendungen" (7) bezeichneten MUs einen Verarbeitungsschritt kennen, so dass die Felder der MUs modifiziert werden, damit sie MUs ohne Rücksendung von der ersten Mobilstation des Netzwerks in Richtung zu der zweiten Mobilstation des Netzwerks entsprechen.

**17.** Verfahren zum Ermitteln der Veränderungen der Qualität eines Mobiltelefonie-Netzwerks gemäß einem der vorhergehenden Ansprüche, **dadurch gekennzeichnet, dass** das Verfahren einen Schritt (S4) des Suchens für jede "Rücksendungen"-MU (6 oder 7) nach einer "eingehend/ausgehend"-MU (5a oder 5b) aufweist, die identische "Kundennummer"-, "Gesprächsteilnehmer-Nummer"-, "Kommunikationsdatum"- und "Kommunikationsstunde"-Felder aufweist, wobei ein Vergleich zwischen den Werten dieser Felder eingesetzt wird, wobei eine Variable Δ (8) berücksichtigt wird, die ein Befreien von der Abweichung der Takte der MSC ermöglicht, so dass jeder "Rücksendungen"-MU die Einrichtungsfelder der entsprechenden mobil-mobil-MU bereitgestellt werden.

18. Verfahren zum Ermitteln der Veränderungen der Qualität eines Mobiltelefonie-Netzwerks gemäß einem der vorhergehenden Ansprüche, **dadurch gekennzeichnet, dass** das Verfahren einen Schritt zur Berechnung von mindestens einem Indikator (S7) aufweist, der mit einer Zelle eines MSC verknüpft ist, der als "MSC-Zell-Code" (16) bezeichnet wird, der durch Aggregation der MUs (15) erhalten wird, die mindestens die identischen Felder "Kommunikationsdatum", "Departement", "Region", "MSC", "LAC", "Zelle", "Art des Gesprächsteilnehmers" und "Populationstyp" aufweisen.

19. Verfahren zum Ermitteln der Veränderungen der Qualität eines Mobiltelefonie-Netzwerks gemäß einem der vorhergehenden Ansprüche, **dadurch gekennzeichnet, dass** das Verfahren einen Schritt des Berechnens von mindestens einem Indikator (S7) aufweist, der mit einem Bündel verknüpft ist, der als "MSC-Bündel" (17) bezeichnet wird, das durch Aggregation der MUs (15) erhalten wird, die mindestens die identischen Felder "Kommunikationsdatum", "Departement", "Region", "MSC", "LAC", "Bündel", "Art des Gesprächsteilnehmers" und "Populationstyp" aufweisen.

20. Verfahren zum Ermitteln der Veränderungen der Qualität eines Mobiltelefonie-Netzwerks gemäß einem der vorhergehenden Ansprüche, **dadurch gekennzeichnet, dass** das Verfahren einen Schritt des Berechnens von mindestens einem Indikator (S7) aufweist, der mit Fax-Daten verknüpft ist, der als "Fax-Daten/MSC" (18) bezeichnet wird, der durch Aggregation der MUs (15) erhalten wird, die mindestens die identischen Felder "Kommunikationsdatum", "Region", "MSC", "Art des Gesprächsteilnehmers" und "Populationstyp" aufweisen.

21. Verfahren zum Ermitteln der Veränderungen der Qualität eines Mobiltelefonie-Netzwerks gemäß einem der vorhergehenden Ansprüche, **dadurch gekennzeichnet, dass** das Verfahren einen Schritt des Berechnens von mindestens einem Indikator (S7) aufweist, der mit EZABP-Nummern verknüpft ist, der als "MSC-EZABP" (19) bezeichnet wird, der durch Aggregation der MUs (15) erhalten wird, die mindestens die identischen Felder "Kommunikationsdatum", "Departement", "Region", "MSC", "EZABP", "Art des Gesprächsteilnehmers" und "Populationstyp" aufweisen.

22. Verfahren zum Ermitteln der Veränderungen der Qualität eines Mobiltelefonie-Netzwerks gemäß einem der vorhergehenden Ansprüche, **dadurch gekennzeichnet, dass** das Verfahren einen Schritt des Berechnens von mindestens einem Indikator aufweist, der mit jedem anderen Typ von Daten in der MU verfügbaren verknüpft sein kann, der durch Aggregation der MUs (15) erhalten wird, die die Felder "Kommunikationsdatum", "Art des Gesprächsteilnehmers", "Netzwerks-Einrichtungs-Knoten" sowie Felder in Bezug auf geographische Bezeichnungen aufweisen.

23. Verfahren zum Ermitteln der Veränderungen der Qualität eines festen Netzwerks gemäß einem der vorhergehenden Ansprüche, **dadurch gekennzeichnet, dass** das Verfahren einen Schritt des Berechnens von mindestens einem Indikator aufweist, der mit sämtlichen anderen Daten, die in der MU (15) des festen Netzwerks verfügbar sind, Kommunikationsdatum, Art des Gesprächsteilnehmers, Populationstyp, Netzwerks-Einrichtungs-Knoten, geographische Bezeichnungen, verknüpft sein kann.

24. System zum Ermitteln der Veränderungen der Qualität eines Mobiltelefonie-Netzwerks an einem Tag J, in einer Stunde H oder in einer Minute M, das eine oder mehrere bestimmte Einrichtungen des Netzwerks und eine zentralisierte Einheit (c) einsetzt, **dadurch gekennzeichnet, dass** das System mindestens folgendes aufweist:

- eine Vorrichtung zum Erfassen der jedem Anruf entsprechenden Nutzungsnachrichten (MU) (1) durch Aufzeichnen der Daten der MUs in einem Speichermittel, auf der Ebene der Mobil-Dienste-Vermittlungsstellen, die als MSC oder Kommutatoren (b) bezeichnet werden, des Netzwerks oder jedes anderen Bereichs eines Netzwerks (fest oder mobil),
- eine Vorrichtung zum Übertragen der gespeicherten Daten der MUs (1) von den MSCs in Richtung zu einer zentralisierten Einheit (c),
- eine Vorrichtung zum Auswählen (c1) der zentralisierten Einheit (c), die ein Vergleichsmittel und ein Speichermittel aufweist, in dem ein Wert des Feldes "Kommunikationsdatum" gespeichert ist, zum Auswählen der MUs (1) des Tages J, der Stunde H oder der Minute M (2a),
- eine Vorrichtung zum Filtern der MUs (4), aufweisend: ein Mittel zum Vergleichen der Werte der "Gesprächsteilnehmer"-Felder, die jeder MU eigen sind, mit Werten der "Gesprächsteilnehmer"-Felder, die in einem Speichermittel gespeichert sind, und ein Mittel zum Trennen der MUs, die als "eingehend-ausgehend" (5) bezeichnet werden, von den MUs, die als "eingehende Rücksendungen" (6) bezeichnet werden, und den MUs, die als "ausgehende Rücksendungen" (7) bezeichnet werden, auf der Grundlage des Feldes "MU-Typ",

- eine Vorrichtung zum Kennzeichnen der Rückrufe zum Auswählen der MUs, die als Rückrufe zu betrachten sind, aus den MUs (4) der Gruppe, die identische Felder "Kunde", "Gesprächsteilnehmer", oder APN für die MUs des Typs DATA und "Kommunikationsdatum" aufweist, wobei die Vorrichtung ein Vergleichsmittel und ein Speichermittel aufweist, in welchem ein Wert des Feldes "Abweichung der Dauer zu der vorhergehenden Kommunikation" gespeichert ist,

- eine Vorrichtung zum Ermitteln von mindestens einem Typ von Testern, wobei die Vorrichtung mit einem Speichermittel verbunden ist, das die neu erkannten Tester (11) speichert, wobei das Speichermittel selbst mit einer Auswahlvorrichtung verbunden ist, die die MUs unterdrückt, die von als Testern erkannten Gesprächsteilnehmern kommen,

- eine Vorrichtung zum Ermitteln der Felder, die geographische und technische Informationen bereitstellen, in Abhängigkeit von dem "Zell-Code"-Feld der MUs (12), die mit einer Vorrichtung zur Rückgewinnung (d) von mindestens einer Liste verbunden sind, die mindestens einen Verweis auf jeden Wert des Feldes "zell-Code" aufweist, wobei die Vorrichtung zum Ermitteln ein Mittel zum Vergleichen des Feldes "Zell-Code", das jeder MU (12) eigen ist, mit den Werten, die von der geladenen Liste angezeigt werden, aufweist,

- ein Mittel zum Berechnen von mindestens einem Indikator mittels Aggregation der MUs (15) in Abhängigkeit von mehreren gemeinsamen Datenfeldern,

- eine Vorrichtung zum Übertragen der berechneten Indikatoren an einen Server (e), auf den lokale Einheiten (f1, f2, f3, f4) Zugriff haben,

- eine Vorrichtung zum Berechnen von Rückrufraten, wobei ein Algorithmus eingesetzt wird, der die folgende Operation realisiert:

$$R\ddot{u}ckrufrate = \frac{Anzahl\ der\ R\ddot{u}ckrufe}{(Anzahl\ derAnrufe - Anzahl\ der\ R\ddot{u}ckrufe)}$$

- eine Signalisierungsvorrichtung, die das Auslösen einer Intervention ermöglicht, zum Wiederherstellen oder Verbessern der Qualität der Kommunikation in einem Abschnitt des Netzwerks in Verbindung mit der errechneten Rückrufrate.

25. System zum Ermitteln der Veränderungen der Qualität eines Mobiltelefonie-Netzwerks gemäß Anspruch 24, **dadurch gekennzeichnet, dass** das System aufweist: eine Vorrichtung zum Ermitteln der Qualität der Kommunikation, aufweisend mindestens ein Mittel zum Vergleichen und ein Mittel zum Speichern in Bezug auf mindestens einen gespeicherten Wert, der dem Durchschnitt der am Tag J-1, in der Stunde H-1 oder in der Minute M-1 (2b) berechneten Rückrufraten und der Nachverfolgung der langsamen Abweichungen auf der Grundlage einer zeitanalyse entspricht.

26. System zum Ermitteln der Veränderungen der Qualität eines Mobiltelefonie-Netzwerks gemäß Anspruch 24 oder 25, **dadurch gekennzeichnet, dass** das System eine Vorrichtung zum Ermitteln der Qualität der Kommunikation aufweist, die mindestens ein Mittel zum Vergleichen und ein Mittel zum Speichern in Bezug auf mindestens einen gespeicherten Wert aufweist, der der Hersteller-Trennungsrate entspricht.

27. System zum Ermitteln der Veränderungen der Qualität eines Mobiltelefonie-Netzwerks gemäß einem der vorhergehenden Ansprüche, **dadurch gekennzeichnet, dass** das System eine Vorrichtung zum Filtern der MUs (1) aufweist, die ein Mittel aufweist zum Vergleichen des Wertes eines jeder MU (1) eigenen Feldes "Populationstyp" mit dem Wert eines Feldes, der in einem Speichermittel gespeichert ist, zum Trennen der Übertragungen der verschiedenen Kundentypen, Vertragskunden, Vorausbezahl-Kunden, Roaming-Teilnehmern,...

28. System zum Ermitteln der Veränderungen der Qualität eines Mobiltelefonie-Netzwerks gemäß einem der vorhergehenden Ansprüche, **dadurch gekennzeichnet, dass** das System mindestens eine Vorrichtung zum Ermitteln von mindestens einem Testertyp aufweist, wobei die Vorrichtung mit einem Speichermittel verbunden ist, das die neu erkannten Tester (11) speichert, wobei das Speichermittel selbst mit einer Auswahlvorrichtung verbunden ist, die die MUs unterdrückt, die von als Testern erkannten Gesprächsteilnehmern stammen.

29. System zum Ermitteln der Veränderungen der Qualität eines Mobiltelefonie-Netzwerks gemäß Anspruch 28, **da-**

**durch gekennzeichnet, dass** das System mindestens eine Vorrichtung zum Erkennen eines Testertyps aufweist, wobei die Erkennungsvorrichtung aufweist: mindestens ein Aufzeichnungsmittel in einem Mittel zum Speichern der Werte des Feldes "Gesprächsteilnehmer" der "eingehendausgehend" MUs (5), für die einerseits die MUs (5) identische "Kunde"-, "Gesprächsteilnehmer"- und "Kommunicationsdatum" -Felder aufweisen, und andererseits ein Messmittel zum Ermitteln von mindestens fünf Rückrufen in einer Minute.

30. System zum Ermitteln der Veränderungen der Qualität eines Mobiltelefonie-Netzwerks gemäß einem der Ansprüche 28 oder 29, **dadurch gekennzeichnet, dass** das System aufweist: mindestens eine Vorrichtung zum Erkennen eines Testertyps, wobei die Erkennungsvorrichtung aufweist: mindestens ein Aufzeichnungsmittel in einem Mittel zum Speichern der Werte des Feldes "Gesprächsteilnehmer" der "eingehend-ausgehend" MUs (5), für die einerseits die MUs identische "Benutzer"-, "Gesprächsteilnehmer"- und "Kommunikationsdatum"-Felder aufweisen, und andererseits ein Mittel zum Messen von mindestens sieben Rückrufen an einem Tag, wobei mindestens fünfzig Prozent der Rückrufe mit einem gleichen Gesprächsteilnehmer durchgeführt wurden, der als "Mehrheitsgesprächsteilnehmer°" bezeichnet wird.

31. System zum Ermitteln der Veränderungen der Qualität eines Mobiltelefonie-Netzwerks gemäß einem der vorhergehenden Ansprüche, **dadurch gekennzeichnet, dass** das System aufweist: eine Vorrichtung zum Verarbeiten der MUs, die als "eingehende Rückrufe" (6) bezeichnet werden, die ein Mittel zur Modifizierung der Felder der MUs aufweist, damit bewirkt wird, dass die als "eingehende Rücksendungen" (6) bezeichneten MUs den MUs ohne Rücksendung von der zweiten Mobilstation des Netzwerks in Richtung zu der ersten Mobilstation des Netzwerks entsprechen.

32. System zum Ermitteln der Veränderungen der Qualität eines Mobiltelefonie-Netzwerks gemäß einem der vorhergehenden Ansprüche, **dadurch gekennzeichnet, dass** das System eine Vorrichtung zum Verarbeiten der MUs aufweist, die als "ausgehende Rücksendungen" (7) bezeichnet werden, die ein Mittel zur Modifizierung der Felder der MUs aufweist, damit bewirkt wird, dass die als "ausgehende Rücksendungen" (7) bezeichneten MUs den MUs ohne Rücksendung von der ersten Mobilstation des Netzwerks in Richtung zu der zweiten Mobilstation des Netzwerks entsprechen.

33. System zum Ermitteln der Veränderungen der Qualität eines Mobiltelefonie-Netzwerks gemäß einem der vorhergehenden Ansprüche, **dadurch gekennzeichnet, dass** das System aufweist: eine Vorrichtung zum Suchen für jede "Rücksendungen"-MU (6 oder 7) einer "eingehend/ausgehend" MU (5), die gemeinsame Felder "Kundennummer", "Gesprächsteilnehmer-Nummer", "Kommunikationsdatum" und "Kommunikationsstunde" aufweist, wobei ein Vergleichsmittel eingesetzt wird, das eine Variable Δ (8) integriert, wodurch ein Steuern der Abweichung der Takte der MSCs ermöglicht wird, wobei die Variable (8) in einem Speichermittel definiert und gespeichert ist.

34. System zum Ermitteln der Veränderungen der Qualität eines Mobiltelefonie-Netzwerks gemäß einem der vorhergehenden Ansprüche, **dadurch gekennzeichnet, dass** das System eine Alarmvorrichtung aufweist, die mit einem Mittel zum Vergleichen der Rückrufrate mit einem zuvor in einem Speichermittel gespeicherten Schwellwert verknüpft ist.

Fig.1a

A

Date de
traitement
Jour J-1
(2b)

Testeurs
déjà élus
(11a)

B

C

D

MU
"entrant
sortant"
(5)

MU
"entrant
sortant"
(5)

MU
"renvois entrant"
avec parties réseau
(9)

MU
"renvois sortant"
avec parties réseau
(10)

Détermination des Testeurs
(S5a)

Testeurs élus
mis à jour
(11b)

Elimination des MU
des Testeurs (S5b)

MU
à traiter
(12)

Rattachement Géographique
au champ "code cellule"
(13)

Rattachement Technique
au champ "code cellule"
(14)

Fig.1b

Affectation des Informations
Géographiques et Techniques (S6)

MU
pour calcul
indicateurs
(15)

Calcul des Indicateurs (S7)

Indicateur
"MSC/Cellule"
(16)

Indicateur
"MSC/Faisceau"
(17)

Indicateur
"Fax-Data/MSC"
(18)

Indicateur
"MSC/EZABP"
(19)

Fig.2

**EP 1 931 159 B1**

## RÉFÉRENCES CITÉES DANS LA DESCRIPTION

**Documents brevets cités dans la description**

- EP 1045601 A